# EUROPEAN PATENT APPLICATION

(11) **EP 4 711 905 A1**
(43) Date of publication of application: **18.03.2026**
(21) Application number: 24818706.4
(22) Date of filing: 05.06.2024
(51) Int. Cl.: G06F 3/04817

(54) **INTERACTION METHOD AND ELECTRONIC DEVICE**

(30) Priority: 09.06.2023 CN 202310685610
(71) Applicant: Huawei Technologies Co., Ltd., Shenzhen, Guangdong 518129 (CN)
(72) Inventor: HU, Liang, Shenzhen, Guangdong 518129 (CN); XU, Jie, Shenzhen, Guangdong 518129 (CN)
(74) Representative: Grünecker Patent- und Rechtsanwälte PartG mbB
(86) International application number: PCT/CN2024/097622
(87) International publication number: WO 2024/251174

(57) **Abstract**

This application discloses an interaction method and an electronic device. The electronic device may create one or more scenario-based folders. In addition to an icon of an application, a service widget may be added to the scenario-based folder. In addition, on a user interface obtained by expanding the scenario-based folder, in addition to icons of a plurality of applications included in the scenario-based folder, one or more service widgets provided by a part of or all the plurality applications, and/or more service widgets of a same type may be displayed. The user may view all service widgets through swipe-up and swipe-down operations, and may further perform an editing operation (for example, pin on top) on the service widget, making it convenient and quick, and improving user experience.

## Description

This application claims priority to Chinese Patent Application No. 202310685610.9, filed with the China National Intellectual Property Administration on June 9, 2023 and entitled "INTERACTION METHOD AND ELECTRONIC DEVICE", which is incorporated herein by reference in its entirety.

### TECHNICAL FIELD

This application relates to the field of terminal technologies, and in particular, to an interaction method and an electronic device.

### BACKGROUND

With popularization of intelligent electronic devices and development of internet technologies, electronic devices such as smartphones, notebook computers, and tablet computers have become indispensable products in people's daily life. To meet increasing use requirements of users, types and quantities of applications (Applications, APPs) installed on these electronic devices are also increasing.

Generally, entries of these applications are displayed on a desktop of the electronic device in a form of icons. In addition to the icons, currently, some electronic device manufacturers provide service widget functions. These service widgets can not only serve as entries of applications, but also serve as entries of sub-functions of the applications. In addition, in comparison with conventional applications, the service widgets have features of clearer visual effect, more free layouts, more flexible sizes, richer content, support for personalized customization, and the like, and can display content of the applications in a lightweight, quick, and efficient manner, and support quick user operations, to implement immediate service access.

In addition, a folder is also one of functions most commonly used by the user on the desktop. The user places icons of a plurality of applications in one folder, so that desktop space can be saved, and it is convenient for the user to search for applications of a same type.

However, currently, use scenarios of the service widget and the folder are still limited, and user experience is poor.

### SUMMARY

Embodiments of this application provide an interaction method and an electronic device. The electronic device may create one or more scenario-based folders, and one or more service widgets provided by a part of or all applications included in the scenario-based folder, and/or more service widgets of a same type may be displayed on a user interface obtained by expanding the scenario-based folder. A user may view all service widgets through swipe-up and swipe-down operations, and the user may further perform an editing operation (for example, pin on top) on the service widget, making it convenient and quick, and improving user experience.

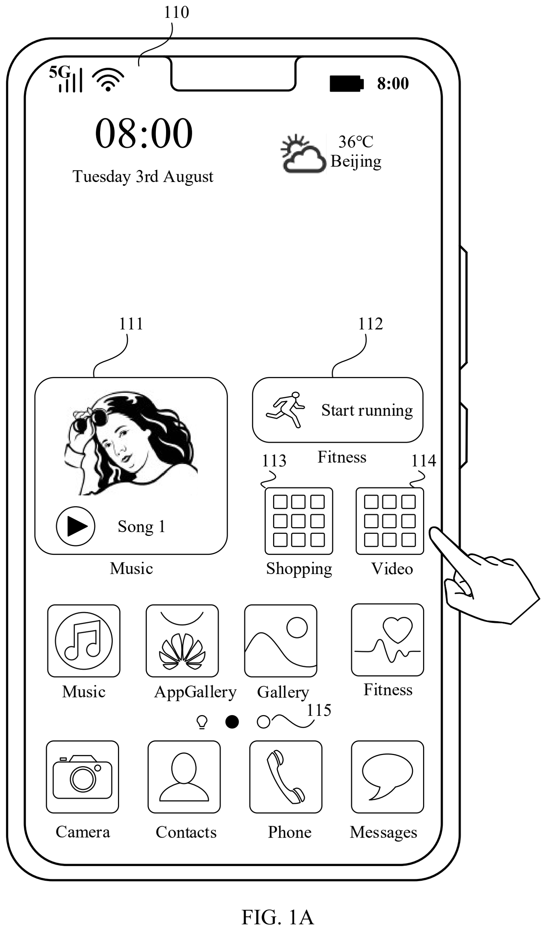

According to a first aspect, an embodiment of this application provides an interaction method. The method includes: An electronic device displays a first user interface, where the first user interface includes an icon of a first folder (for example, a video folder shown in FIG. 1A); the electronic device detects a first operation (for example, a tap operation) of a user on the icon of the first folder; and the electronic device displays a second user interface in response to the first operation, where icons of one or more applications included in the first folder and one or more service widgets associated with the first folder are displayed on the second user interface.

In some embodiments, the first user interface may be, for example, a desktop shown in FIG. 1A, the icon of the first folder may be, for example, an icon of a folder shown in FIG. 1A (for example, an icon 114 of the video folder), and the second user interface may be a user interface obtained by opening the first folder by the user.

In some embodiments, the icon of the first folder may be a small folder icon, and the small folder icon is used to open an entire folder after a tap operation is received. Alternatively, the icon of the first folder may be a large folder icon, and the large folder icon includes an application icon that may be used to directly start an application and an icon or an area or another operation manner that is used to directly open a folder. After an operation for directly opening a folder is received, the folder is opened.

In some embodiments, an interface obtained by opening the folder is the second user interface, that is, it may be considered that the folder includes an application icon and an application widget. In some other embodiments, the second user interface includes an interface obtained by opening the folder and service widget information. In other words, it may be considered that the folder includes information such as application icons. After the folder is opened, not only information such as application icons in the opened folder is displayed, but also service widgets related to these application icons are displayed on the second user interface.

In some embodiments, the one or more service widgets include a service widget recommended by an operating system of the electronic device. Factors of a recommendation by the system may include historical use records of the user, for example, a video watching record and exercise history of the user. For example, the user has previously watched a specific drama series on a video application A in a folder, and the system may recommend, when the drama series is updated, a widget that can be used to directly open a latest drama series, and display the widget on the second user interface. In some other embodiments, the one or more service widgets include a service widget set by the user, or include a service widget temporarily downloaded from a network.

According to the method provided in the first aspect, the service widget associated with the application in the folder may be displayed on the user interface obtained by expanding the scenario-based folder. In this way, for trending information (for example, popular drama series across different video applications and diverse news content) and watching history of a plurality of applications of a same type without sequentially starting them. This is convenient and quick, and improves user experience.

In a possible implementation, on the second user interface, all service widgets may not be displayed at a time, that is, all or a part of the service widgets are hidden. In this case, the method further includes: The electronic device detects a second operation of the user on the second user interface; and the electronic device displays all or a part of hidden service widgets in response to the second operation.

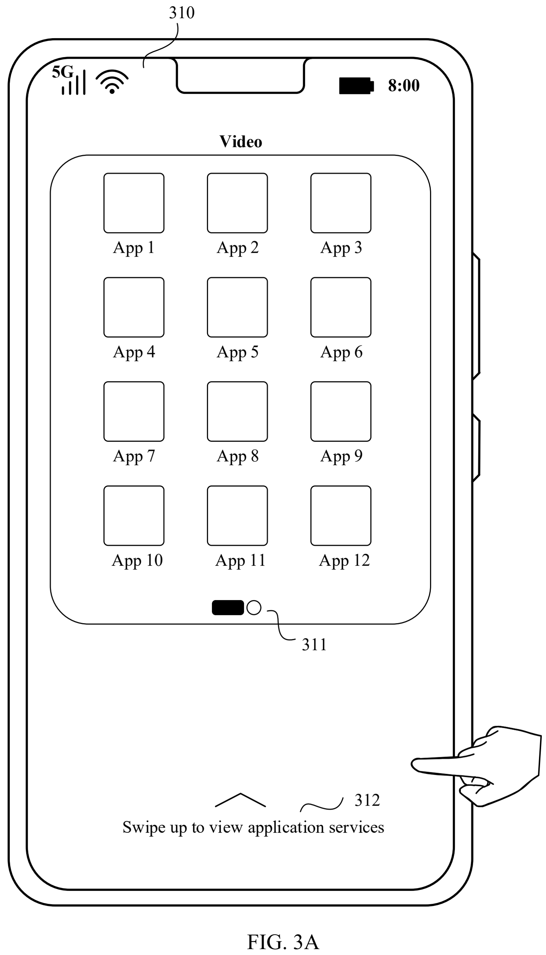

In some embodiments, the second operation may be, for example, a swipe-up operation or a tap operation (for example, a tap operation on an indicator 312) of the user on a user interface shown in FIG. 3A. In this way, the electronic device may be triggered to display one or more service widgets. Alternatively, the second operation may be, for example, an operation of swiping up or down by the user to view all service widgets. In this way, the electronic device may be triggered to display the one or more service widgets in a scrolling manner, so that the user can view all the service widgets. The display in the scrolling manner may be performed on an entire interface, or may be performed in a local area on the interface.

In a possible implementation, that the electronic device displays all or the part of the hidden service widgets in response to the second operation specifically includes: The electronic device enlarges a service widget display area in response to the second operation, where the enlarged service widget display area is used to display a larger quantity of service widgets.

In this way, the service widget display area is enlarged, so that the electronic device can display a larger quantity of service widgets, which facilitates viewing by the user and improves user experience.

In a possible implementation, in response to the second operation, the method further includes: The electronic device reduces an application icon display area in the first folder, where a reduced application icon display area specifically includes one or more of the following: a quantity of displayed icons of applications, a size of the displayed icon of the application, or a spacing between the displayed icons of the applications in the application icon display area is reduced.

In this way, when a total display area on the second user interface remains unchanged, the service widget display area may be enlarged by reducing the application icon display area in the first folder, so that the electronic device can display a larger quantity of service widgets, which facilitates viewing by the user and improves user experience.

It should be noted that the total display area on the second user interface may also be enlarged or reduced. The enlargement of the service widget display area and the reduction of the application icon display area may not occur at the same time.

In a possible implementation, the second operation is a slide operation of the user in a first direction on the second user interface. Optionally, the service widget display area may be enlarged with the slide operation, and optionally, the application icon display area may be reduced with the slide operation.

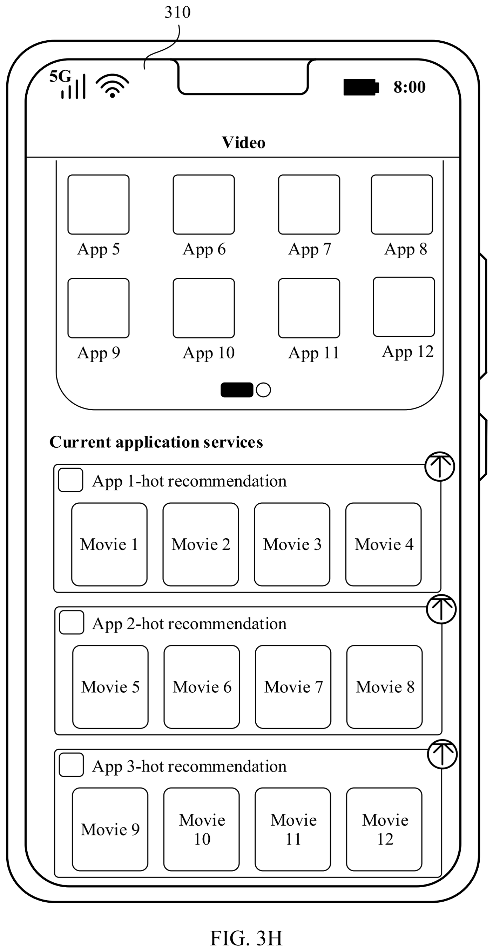

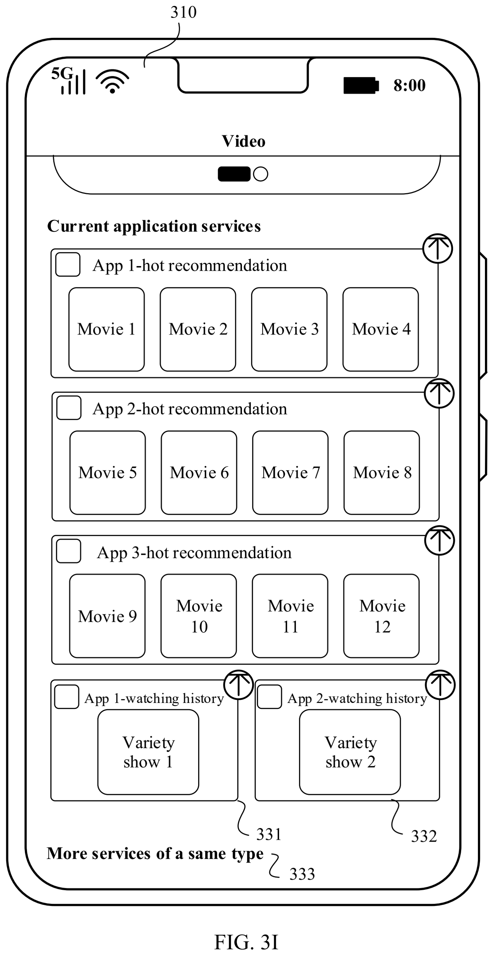

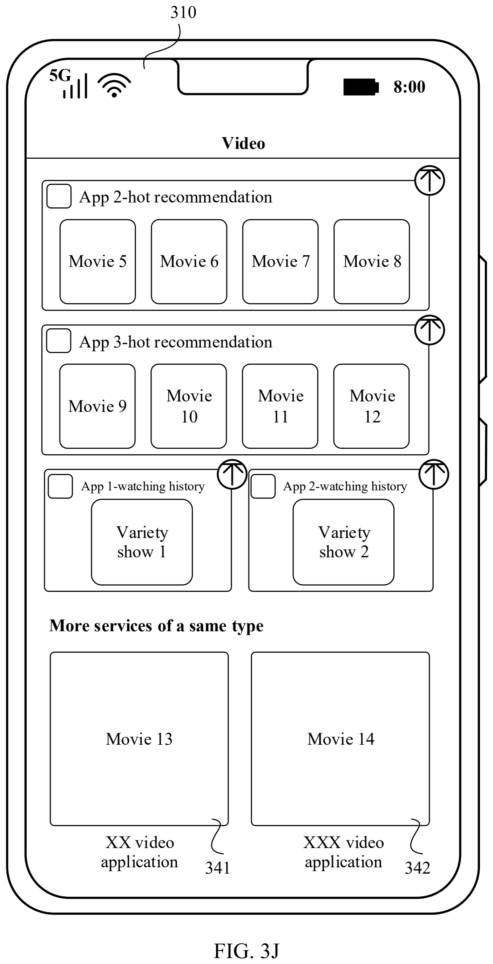

In some embodiments, the slide operation in the first direction may be a swipe-up operation of the user on the second user interface. In this way, the electronic device may sequentially display effect shown in FIG. 3H, FIG. 3I, and FIG. 3J, that is, the service widget display area is enlarged with the slide operation, and the application icon display area is reduced with the slide operation.

In another possible implementation, the enlargement of the service widget display area and the reduction of the application icon display area may not occur at the same time.

In a possible implementation, the electronic device detects a slide operation of the user in the first direction in the service widget display area; and in response to the slide operation, the electronic device displays, in a scrolling manner, more service widgets associated with the first folder.

Effect of the display in the scrolling manner may occur on an entire second user interface, or may occur in a local area on the second user interface, for example, an area in which the service widgets are located.

In this way, with the slide operation of the user, the electronic device may display, in the scrolling manner, more service widgets associated with the first folder in a direction of the slide operation, for example, as shown in FIG. 3H, FIG. 3I, and FIG. 3J.

In a possible implementation, the icons of the one or more applications and the service widgets are respectively displayed in a first display area and a second display area. Further, optionally, an area partition indication may be displayed between display areas, and a name of each display area may also be displayed in the display area.

In this way, the icons of the one or more applications and the service widgets may be separately displayed in different display areas on the electronic device, so that an arrangement is clearer, to facilitate viewing and searching by the user.

In a possible implementation, the icons of the applications in the first folder are displayed on a plurality of pages, the plurality of pages include a first page and a second page, and when an icon of an application on the first page is displayed on the second user interface, the service widget displayed on the second user interface is a service widget associated with the application on the first page.

In this way, the electronic device may preferentially display or display only one or more service widgets associated with the application on the current page of the first folder, to ensure association between the icon of the application and an application widget, and facilitate viewing the widget corresponding to the application by the user, so as to quickly enter a function of the application.

In a possible implementation, the method further includes: The electronic device detects a page switching operation of the user; and the electronic device displays an icon of an application on the second page in response to the page switching operation, and the electronic device displays a service widget associated with the application on the second page.

In this way, the electronic device can support the user to perform the page switching operation on the first folder, and the electronic device may preferentially display or display only the one or more service widgets associated with the application on the current page of the first folder.

In a possible implementation, the method further includes: The electronic device detects a third operation of the user on the second user interface; and the electronic device hides all or a part of the displayed service widgets in response to the third operation.

The third operation may be a swipe-down operation. In this way, the electronic device may be triggered to return to display previously displayed service widgets, and hide a part of the service widgets, or hide all the service widgets.

In a possible implementation, that the electronic device hides all or the part of the displayed service widgets in response to the third operation specifically includes: The electronic device reduces the service widget display area in response to the third operation, where a reduced service widget display area is used to display a smaller quantity of service widgets.

In this way, the service widget display area is reduced, so that the electronic device can hide the service widgets.

In a possible implementation, in response to the third operation, the method further includes: The electronic device enlarges the application icon display area in the first folder, where an enlarged application icon display area specifically includes one or more of the following: the quantity of the displayed icons of the applications, the size of the displayed icon of the application, or the spacing between the displayed icons of the applications in the application icon display area is increased.

In this way, the application icon display area in the first folder is enlarged, so that the icons of the applications in the first folder may be displayed, and the service widgets may be hidden.

In a possible implementation, the third operation is a slide operation of the user in a second direction on the second user interface. Optionally, the service widget display area is reduced with the slide operation, and further optionally, the application icon display area is enlarged with the slide operation.

The slide operation in the second direction may be a swipe-down operation of the user on the second user interface. In this way, the electronic device may sequentially display effect shown in FIG. 3J, FIG. 3I, and FIG. 3H, that is, the service widget display area is reduced with the slide operation, and the application icon display area is enlarged with the slide operation.

In a possible implementation, the method further includes: The electronic device detects a slide operation of the user in a second direction in the service widget display area; and in response to the slide operation, the electronic device displays, in a scrolling manner, the service widgets associated with the first folder.

In this way, with the slide operation of the user, the electronic device may display, in the scrolling manner, more service widgets associated with the first folder in a direction of the slide operation, for example, as shown in FIG. 3J, FIG. 3I, and FIG. 3H.

In a possible implementation, the method further includes: The electronic device detects a fourth operation, where the fourth operation is used to pin a target service widget in the one or more service widgets on top for display; and in response to the fourth operation, the electronic device moves a display position of the target service widget to a pinned position.

In some embodiments, the fourth operation may be, for example, an operation of tapping a pin option by the user, or may be an operation of dragging the target service widget to the pinned position by the user. An operation of triggering the target service widget to be pinned on top for display is not limited in embodiments of this application. The pinned position is not specifically limited in this application. The pinned position may be a topmost position of all widgets, or may be a topmost position on an entire interface, another position that is easy for the user to pay attention to, or the like.

In this way, the electronic device can support the user to pin a service widget (for example, a service widget in which the user is interested) on top for display, so that the user can view content displayed on the service widget in time, and does not need to search for the service widget through a slide operation. This is convenient and quick.

In a possible implementation, the method further includes: The electronic device detects a fifth operation; and the electronic device displays a first window in response to the fifth operation, where the first window includes one or more options, and the one or more options are used to perform, when an operation is received (or being triggered), an editing operation on a selected service widget in the one or more service widgets. The editing operation includes any one of the following: moving the selected service widget to a higher ranking position in the plurality of service widgets; removing the selected service widget; adding the selected service widget to a desktop; moving the selected service widget to the area in which the icons of the one or more applications are located in the first folder; or combining selected service widgets to generate a new combined widget.

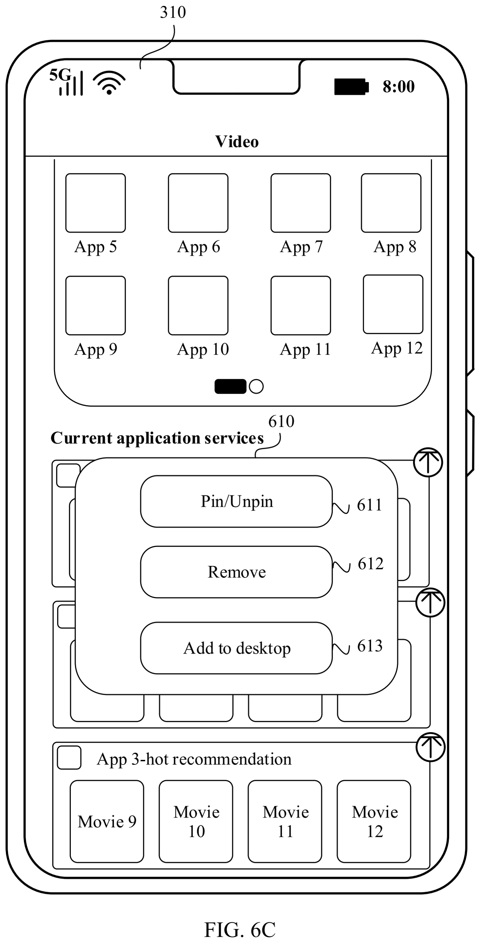

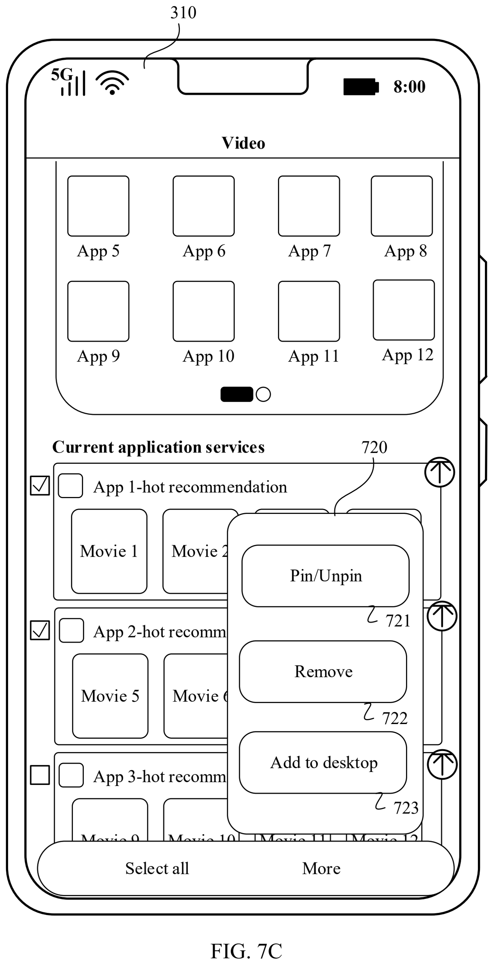

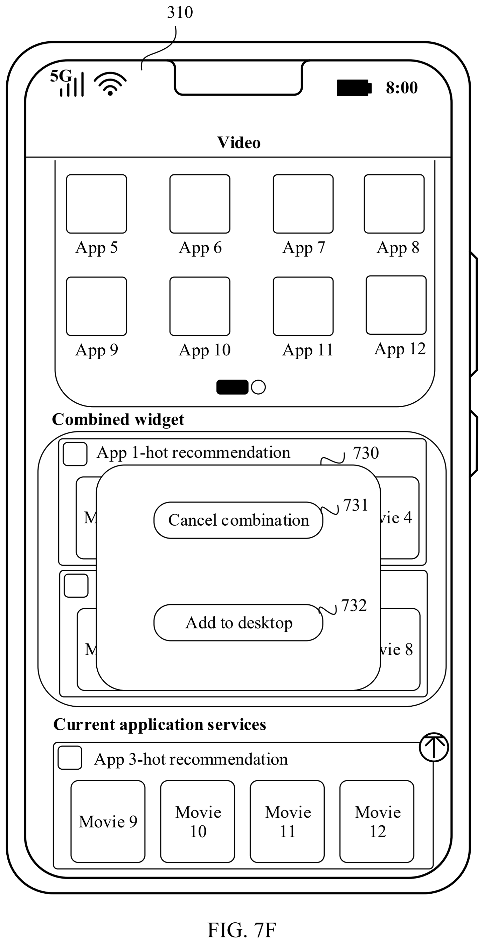

The fifth operation may be, for example, an operation of touching and holding the service widget, and the first window may be, for example, a window shown in FIG. 6C, FIG. 7C, or FIG. 7F.

In this way, the electronic device may support the user to perform the editing operations (for example, pining, removing, adding to the desktop, adding to the folder, and combining) on the one or more service widgets. This is flexible and convenient, and brings personalized experience to the user.

In a possible implementation, the method further includes: The electronic device detects an operation of touching and holding and dragging, by the user, a target service widget in the one or more service widgets to the first display area, where the first display area is used to display the icons of the one or more applications in the first folder; and the electronic device adds the target service widget to the first folder in response to the operation.

If the service widgets are set to be not in the folder initially, the service widgets may be added to the folder through the foregoing user operation. In this way, the widgets can be viewed in the folder in a long term, thereby providing convenience for use.

In a possible implementation, the one or more service widgets include a first service widget, and the method further includes: when a first condition is met, the electronic device automatically adjusts a ranking position of the first service widget in the plurality of service widgets. The first condition includes one or more of the following: ranking positions of the icons of the applications in the first folder change, a quantity of use times of the first service widget changes, or display content on the first service widget changes.

In this way, the electronic device may automatically update an arrangement sequence of the service widgets under some conditions.

In a possible implementation, the service widgets associated with the first folder specifically include: a service widget provided by the one or more applications; and/or a service widget provided by another application of a same type as the one or more applications; and/or a service widget that is related to the one or more applications and that is provided by a system. The system herein refers to the operating system of the electronic device.

In this way, the service widgets that are associated with the first folder and that are displayed on the electronic device may be from a plurality of providers, and the service widgets may also be more diversified.

In a possible implementation, after the electronic device combines selected service widgets to generate the combined widget, the method further includes: The electronic device detects a sixth operation; and the electronic device displays a second window in response to the sixth operation, where the second window includes one or more options, the one or more options are used to perform an editing operation on the combined widget when an operation is received, and the editing operation includes any one of the following: canceling combination of the combined widget; adding the combined widget to the desktop; and adding the combined widget to the first folder.

The sixth operation may be, for example, an operation of touching and holding the combined widget, and the first window may be, for example, a window shown in FIG. 7F.

In this way, the electronic device may support the user to perform the editing operations (for example, canceling combination, adding to the desktop, and adding to the folder) on the combined widget. This is flexible and convenient, and brings personalized experience to the user.

In a possible implementation, a second service widget is displayed on the first user interface, and the method further includes: The electronic device detects an operation of touching and holding and dragging, by the user, the second service widget to the icon of the first folder or near the icon of the first folder within a preset distance; and the electronic device adds the second service widget to the first folder in response to the operation.

The first user interface may be, for example, the desktop of the electronic device, and the second service widget may be a service widget displayed on the desktop.

In this way, for some service widgets (for example, service widgets related to private information of the user) that are not suitable to be added to the desktop for display, the electronic device can support the user to add the service widgets to a folder, so that privacy is higher. In another aspect, for some service widgets (for example, a delivery widget and an energy harvesting widget) that are occasionally used, the electronic device can support the user to add the service widgets to a folder, so that desktop space is not occupied, and it is convenient for the user to view the service widgets when using applications (such as shopping applications) associated with the service widgets.

In a possible implementation, the icons of the one or more applications include an icon of a first application, and the method further includes: The electronic device detects an operation of the user on the icon of the first application, and the electronic device displays an interface of the first application in response to the operation.

In other words, the scenario-based folder in this application also has a function of an original folder. For example, when an icon of an application in the folder is taped, the electronic device may start the application and display an interface of the application.

According to a second aspect, an embodiment of this application provides an electronic device. The electronic device includes one or more processors and one or more memories, the one or more memories are coupled to the one or more processors, the one or more memories are configured to store computer-readable instructions, and when the one or more processors execute the computer-readable instructions, the electronic device is enabled to perform the method according to any one of the possible implementations of the first aspect.

According to a third aspect, an embodiment of this application provides a computer storage medium. The computer storage medium stores computer-readable instructions, and when the computer-readable instructions are run on an electronic device, the electronic device is enabled to perform the method according to any one of the possible implementations of the first aspect.

According to a fourth aspect, an embodiment of this application provides a computer program product. The computer program product includes computer-readable instructions, and when the computer-readable instructions are run on a computer, the computer is enabled to perform the method according to any one of the possible implementations of the first aspect.

### BRIEF DESCRIPTION OF DRAWINGS

FIG. 1A to FIG. 1C are diagrams of a group of user interfaces according to an embodiment of this application;
FIG. 2 is a diagram of a user interface related to a scenario-based folder according to an embodiment of this application;
FIG. 3A to FIG. 3K are diagrams of another group of user interfaces according to an embodiment of this application;
FIG. 4 is a diagram of a user interface according to an embodiment of this application;
FIG. 5A to FIG. 5C are diagrams of another group of user interfaces according to an embodiment of this application;
FIG. 6A to FIG. 6E are diagrams of another group of user interfaces according to an embodiment of this application;
FIG. 7A to FIG. 7G are diagrams of another group of user interfaces according to an embodiment of this application;
FIG. 8A to FIG. 8E are diagrams of another group of user interfaces according to an embodiment of this application; and
FIG. 9 is a diagram of a structure of an electronic device according to an embodiment of this application.

### DESCRIPTION OF EMBODIMENTS

The following clearly and completely describes technical solutions in embodiments of this application with reference to accompanying drawings in embodiments of this application. In descriptions of embodiments of this application, unless otherwise specified, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In addition, in the descriptions of embodiments of this application, "a plurality of" means two or more.

It should be understood that terms "first", "second", and the like in the specification, the claims, and the accompanying drawings of this application are intended to distinguish between different objects, but are not intended to describe a specific order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this application means that a particular feature, structure, or feature described with reference to an embodiment may be included in at least one embodiment of this application. The phrase shown in various positions in this specification may not necessarily refer to a same embodiment, and is not an independent or optional embodiment exclusive from another embodiment. It is explicitly and implicitly understood by a person skilled in the art that embodiments described in this application may be combined with another embodiment.

In embodiments of this application, the term "example", "for example", or the like is used to give an example, an illustration, or a description. Any embodiment or design scheme described as an "example" or "for example" in embodiments of this application should not be construed as being more preferred or more advantageous than another embodiment or design scheme. Exactly, use of the term "example", "for example", or the like is intended to present a related concept in a specific manner.

A term "user interface (user interface, UI)" in the following embodiments of this application is a medium interface for interaction and information exchange between an application program (or referred to as an application) or an operating system and a user. The user interface implements conversion between an internal form of information and a form acceptable to the user. The user interface is source code written in a specific computer language like Java or an extensible markup language (extensible markup language, XML). Interface source code is parsed and rendered on an electronic device, and is finally presented as content that can be identified by the user. A frequently-used representation form of the user interface is a graphical user interface (graphical user interface, GUI), and is a user interface that is displayed in a graphical manner and that is related to a computer operation. The user interface may be a visual interface element like a text, an icon, a button, a menu, a tab, a text box, a dialog box, a status bar, a navigation bar, or a widget that is displayed on a display of the electronic device.

In a process of using the electronic device, the user often uses a desktop of the electronic device. Desktop widgets such as icons of one or more applications, an icon of a folder, and a service widget may be displayed on the desktop. The desktop widget may be used to provide a quick entry of visual information and/or a function.

The folder is one of functions that are most commonly used by the user on the desktop. The electronic device may support a folder created by a system by default or a folder created by the user. The folder created by the system by default or created by the user may include icons of a plurality of applications. In this way, the icons of the plurality of applications are placed in one folder. In one aspect, desktop space can be saved. In another aspect, the plurality of applications may be applications of a same type (for example, a video type or a shopping type), so that the user can conveniently search for the applications of the same type. In addition, the icon of the folder may be displayed in two formats: a large folder format and a small folder format. The large folder format is a display format that supports one-tap startup of an application. When the large folder format is used for display, an application may be directly started when the user taps an icon of the application in the folder. When the small folder format is used for display, the user needs to first tap the icon of the folder to display icons of applications in the folder in an expanded manner, and then tap an icon of a corresponding application to start the application. Similar to the small folder format, when the large folder format is used for display, the user may also trigger, through a corresponding operation (for example, tapping a display area other than an application icon display area in the folder, or tapping a display area in which icons of applications in the folder are superimposed), display of the icons of the applications in the folder in the expanded manner. Then, the user taps an icon of a corresponding application to start the application.

The service widget may also be referred to as a card, a service card, or a widget, is in a form of a card for interface displaying, and may be used to carry a type of detailed information or interaction of an application. For example, important information (for example, notification information and schedule information) or some functions (for example, a highlight function/a shortcut function commonly used by the user) of the application may be displayed. The user may use the service widget through a shortcut gesture, to implement instant service access and reduce hierarchical redirections. This can conveniently bring shallow interaction experience to the user.

It should be noted that the service widget is merely a word used in embodiments of this application, a meaning represented by the service widget has been recorded in embodiments of this application, and a name of the service widget does not constitute any limitation on embodiments of this application.

When the electronic device displays another user interface (for example, a user interface of an application) other than the desktop, after detecting an operation performed on a home screen key, the electronic device may return to display the desktop of the electronic device. The home screen button may also be referred to as a home button or the like. The home screen button may be a physical button or a virtual button on the electronic device. Alternatively, a function corresponding to the home screen button may be implemented through an operation gesture, for example, an operation gesture of swiping up at the bottom of a screen.

Currently, in a process of using the folder by the user, the following experience problems may exist: When the user wants to watch a video or view news information, sometimes the user does not know which popular dramas are available in different video applications or which news information is available in different news applications. In this case, the user needs to sequentially start different applications to check. In addition, some functions of some applications are at deep hierarchical layers, and the user needs to perform a plurality of operations to find the functions. This results in cumbersome operations and poor user experience.

For example, refer to FIG. 1A. A user interface 110 may be a user interface of the desktop of the electronic device. Desktop widgets may be displayed on the user interface 110, for example, one or more service widgets (for example, a service widget 111 provided by a music application and a service widget 112 provided by a fitness application), icons of one or more folders (for example, an icon 113 of a shopping folder and an icon 114 of a video folder), and icons of one or more applications (for example, an icon of the music application, an icon of an AppGallery application, an icon of a gallery application, an icon of the fitness application, an icon of a camera application, an icon of a contacts application, an icon of a phone application, and an icon of a messages application). A page indicator 115 may further be displayed on the user interface 110 and the page indicator 115 may indicate a total quantity of pages on the desktop and a position relationship between a currently displayed page and another page. The user can browse another page through a leftward/rightward slide operation.

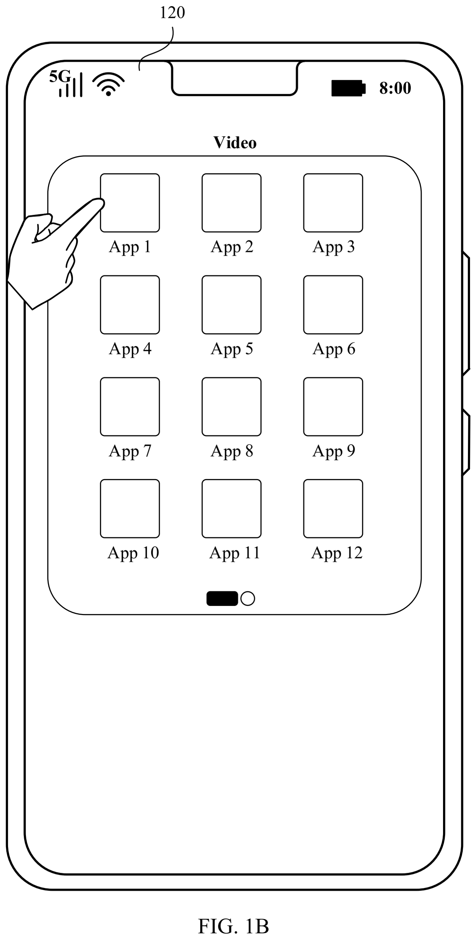

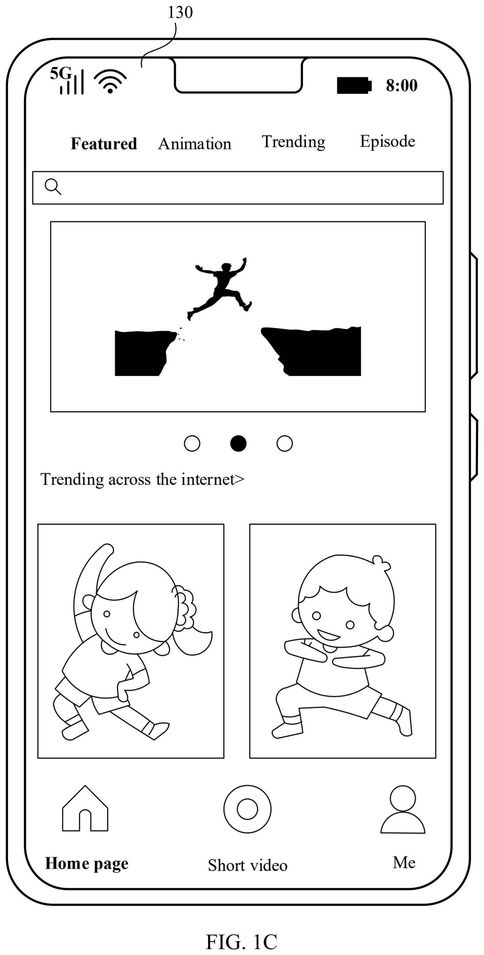

Still refer to FIG. 1A. An example in which the user starts an application in the video folder is used. First, the electronic device may detect an operation (for example, a tap operation) of the user on the icon 114 of the video folder, and in response to the operation, the electronic device may display a user interface 120 shown as an example in FIG. 1B. An expanded video folder may be displayed on the user interface 120. It can be learned that the video folder includes icons of a plurality of applications (for example, an icon of an app 1, an icon of an app 2, and an icon of an app 3). If the user wants to start an application in the video folder, the electronic device may detect an operation (for example, a tap operation) of the user on an icon of the application (for example, the app 1) in the video folder. In response to the operation, the electronic device may start the application, and display a user interface corresponding to the application (for example, a main interface 130 of the app 1 shown as an example in FIG. 1C). The user needs to continue to perform a manual operation on the user interface to use more functions of the application (for example, viewing more popular dramas and viewing watching history). It is easy to understand that if the user wants to start another application in the video folder, the user needs to first return to the desktop shown in FIG. 1A, and then repeat the foregoing operation process of starting the app 1 in the video folder to start the another application in the video folder. This results in cumbersome operations and poor user experience.

Currently, in the process of using the service widget by the user, the following experience problem may exist: Some service widgets related to private information (such as physiological information, a weight, stock information, and fund information) of the user are not suitable to be displayed on the desktop. However, because the electronic device generally only supports the user to add the service widget to the desktop for display, privacy is poor, and a trouble that user privacy is easily leaked is caused.

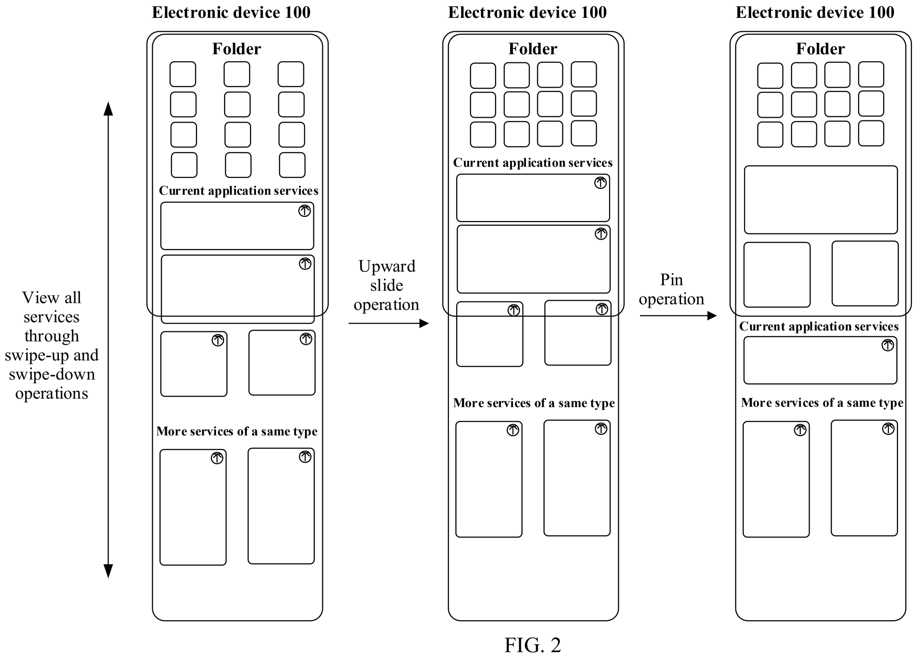

Based on the foregoing experience problems that may exist in the processes of using the folder and the service widget by the user, an embodiment of this application provides a scenario-based folder interaction method, which may be applied to an electronic device 100. The scenario-based folder may be a folder based on interaction of an original folder (for example, a folder created by a user or a system native folder). The electronic device 100 may not only support the user to add icons of a plurality of applications to the scenario-based folder, but also support the user to add one or more service widgets to the scenario-based folder. In addition, with reference to FIG. 2, different from a user interface obtained by expanding an original folder (refer to FIG. 1B), on a user interface obtained by expanding the scenario-based folder, in addition to icons of a plurality of applications included in the scenario-based folder, one or more service widgets provided by a part of or all the plurality of applications, and/or more service widgets of a same type may be displayed. The electronic device 100 may support the user to view all service widgets through swipe-up and swipe-down operations, and the electronic device 100 may further support the user to perform an editing operation (for example, pin on top) on the service widget. Details are described in subsequent embodiments and are not described herein.

A presentation form of "service widgets provided by a part of or all the plurality of applications, and/or more service widgets of a same type" may be visually referred to as a "waterfall form".

It should be noted that the scenario-based folder (or referred to as a scenario/scene folder) is merely a word used in embodiments of this application, a meaning represented by the scenario-based folder has been recorded in embodiments of this application, and a name of the scenario-based folder cannot constitute any limitation on embodiments of this application.

It should be noted that, for ease of description and differentiation from the scenario-based folder in embodiments of this application, in embodiments of this application, a folder that supports only addition of icons of a plurality of applications, and that cannot support addition and display of a service widget is referred to as an original folder. The original folder may also be referred to as a common folder. This is not limited in embodiments of this application.

According to the scenario-based folder interaction method provided in embodiments of this application, in one aspect, for some service widgets (for example, a service widget related to private information of the user) that are not suitable to be added to the desktop for display, the electronic device 100 can support the user to add the service widgets to the scenario-based folder, so that privacy is higher. In another aspect, for some service widgets (for example, a delivery widget or an energy harvesting widget) that are occasionally used, the electronic device 100 can support the user to add the service widgets to the scenario-based folder, so that desktop space is not occupied, and it is convenient for the user to view the service widgets when using applications (such as shopping applications) associated with the service widgets. In addition, a service widget provided by an application in the folder may be displayed on the user interface obtained by expanding the scenario-based folder. In this way, the user can quickly view trending information (such as popular drama series across different video applications and diverse news content) and watching history of a plurality of applications of a same type without sequentially starting them. This is convenient and quick, and improves user experience.

It should be noted that the electronic device 100 in embodiments of this application may be a portable electronic device carrying HarmonyOS^{®}, iOS^{®}, Android^{®}, Microsoft^{®}, or another operating system, for example, a mobile phone, a tablet computer, a smartwatch, a smart band, an AR device, or a VR device, or may be a non-portable electronic device, for example, a laptop (Laptop) with a touch-sensitive surface or a touch panel or a desktop computer with a touch-sensitive surface or a touch panel. A type of the electronic device 100 is not limited in embodiments of this application.

**With reference to** **FIG. 3A to FIG. 3K****,** **FIG. 4****, and** **FIG. 5A** **to** **FIG. 5C****, the following describes in detail a series of example user interfaces involved in a process in which a user views a service widget by using the scenario-based folder interaction method provided in embodiments of this application.**

In embodiments of this application, icons of one or more scenario-based folders may be displayed on the desktop of the electronic device 100. For example, both the icon 113 of the shopping folder and the icon 114 of the video folder that are shown as examples in FIG. 1A may be icons of scenario-based folders, and display formats of the icons of the scenario-based folders may also include two types: a large folder format and a small folder format. It can be learned that, display formats of the icon 113 of the shopping folder and the icon 114 of the video folder that are shown as examples in FIG. 1A are both the small folder format. It is easy to understand that, regardless of whether the large folder format or the small folder format is used for display, operations of triggering "display the user interface obtained by expanding the scenario-based folder" may be the same or similar, for example, may be an operation of tapping the icon of the scenario-based folder. In this embodiment of this application, the small folder format is used as an example for description.

A name (for example, shopping or video) of the scenario-based folder may be set by a system, or may be customized by the user. This is not limited in embodiments of this application.

Still refer to FIG. 1A. The scenario-based folder, namely, the video folder, is used as an example. The electronic device 100 may detect an operation (for example, a tap operation) of the user on the icon 114 of the video folder, and in response to the operation, the electronic device 100 may display a user interface 310 shown as an example in FIG. 3A.

Refer to FIG. 3A. The user interface 310 may include icons of a plurality of applications (for example, an icon of an app 1, an icon of an app 2, and an icon of an app 3) in the video folder. It can be learned that a layout style of the icons of the applications in the video folder is a style of 3*4 (that is, icons of a maximum of three applications are displayed in each row, and icons of a maximum of four rows of applications are displayed on one page).

In embodiments of this application, the layout style of the icons of the applications in the folder and an arrangement sequence of the icons of the applications may be set by the system, or may be customized by the user. This is not limited in embodiments of this application.

Still refer to FIG. 3A. The electronic device 100 may determine a total quantity of pages (namely, a quantity of horizontal pages) of a folder based on a quantity of icons of applications and/or a quantity of service widgets included in the folder. If the quantity is too large to be displayed entirely on a single page, the electronic device 100 may display the icons of the applications and/or the service widgets in the folder on a plurality of pages. In this case, the user interface 310 may further include a page indicator 311. The page indicator 311 may indicate the total quantity of pages of the folder and a position relationship between a currently displayed page and another page, and the user may browse, through a leftward/rightward slide operation, an icon of an application and a service widget that are displayed on the another page.

Still refer to FIG. 3A. The user interface 310 may further include an indicator 312. The indicator 312 may be used to prompt the user to perform a corresponding operation (for example, a swipe-up operation) to view a service widget associated with the application in the folder.

The indicator 312 may be displayed in a style like a text (for example, "Swipe up to view an application service" shown in FIG. 3A) or a graph (for example, an upward arrow shown in FIG. 3A). This is not limited in embodiments of this application.

Still refer to FIG. 3A. If the user wants to view the service widget associated with the application in the folder, the electronic device 100 may detect a corresponding operation of the user, and in response to the operation, the electronic device 100 may display one or more service widgets associated with the applications in the folder.

The "corresponding operation" may be a swipe-up operation of the user on the user interface 310, or may be a tap operation of the user on the indicator 312. This is not limited in embodiments of this application.

The "one or more service widgets associated with the applications in the folder" may refer to one or more service widgets provided by a part of or all the applications in the folder, and/or one or more service widgets provided by one or more applications of a same type as the applications in the folder, and/or one or more service widgets that are related to one or more applications in the folder and that are provided by the system.

In this embodiment of this application, to facilitate the user to view the service widgets, after detecting the foregoing corresponding operation of the user, the electronic device 100 may spare a larger display area on the screen in some manners, to display one or more service widgets associated with the applications in the folder. The foregoing "some manners" may include but are not limited to the following two manners.

### 1. Changing the layout style of the icons of the applications in the folder

Still refer to FIG. 3A. It can be learned that the layout style of the icons of the applications in the folder shown in FIG. 3A is the style of 3*4 (that is, icons of a maximum of three applications are displayed in each row, and icons of a maximum of four rows of applications are displayed on one page). The electronic device 100 may change the style of 3*4 to a style that occupies a smaller display area, for example, a style of 4*3 (that is, icons of a maximum of four applications are displayed in each row, and icons of a maximum of three rows of applications are displayed on one page), a style of 6*2 (that is, icons of a maximum of six applications are displayed in each row, and icons of a maximum of two rows of applications are displayed on one page), and the like. This is not limited in embodiments of this application.

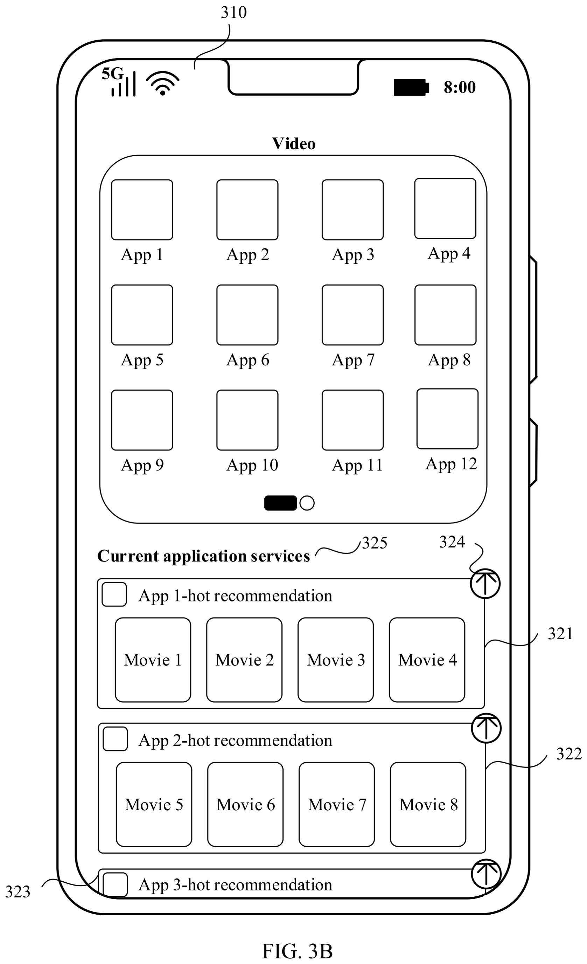

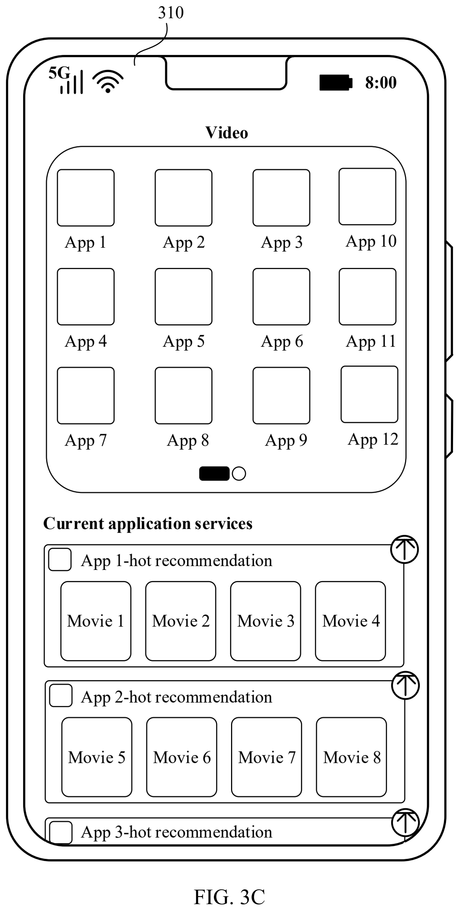

In the style of 4*3, the electronic device 100 may arrange and display the icons of the applications according to an arrangement sequence of the icons of the applications shown in FIG. 3B or FIG. 3C.

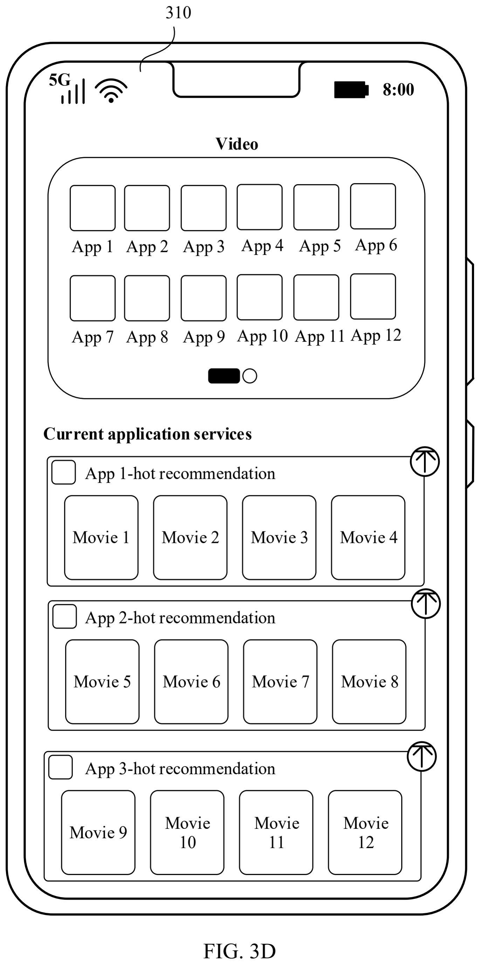

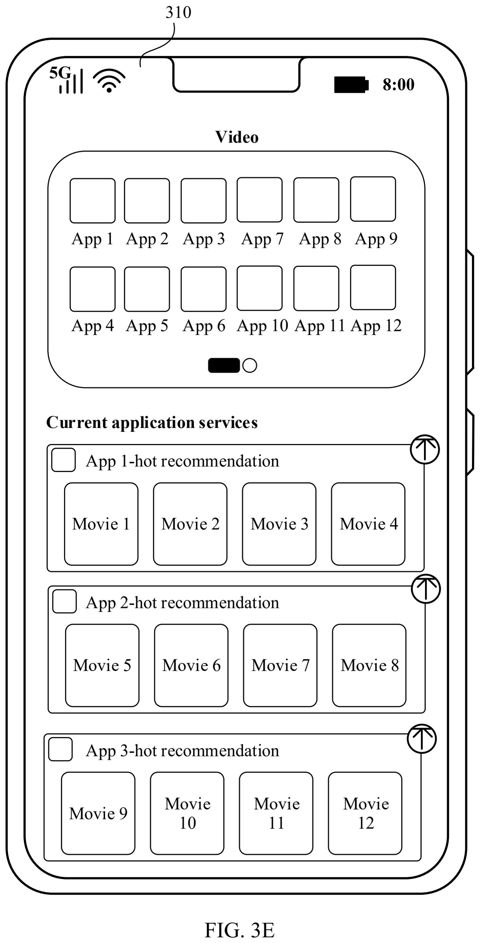

In the style of 6*2, the electronic device 100 may arrange and display the icons of the applications according to an arrangement sequence of the icons of the applications shown in FIG. 3D or FIG. 3E.

It can be learned that for the same folder, the style of 3*4 occupies a largest display area, and the style of 6*2 occupies a smallest display area.

### 2. Reducing display sizes of the icons of the applications in the folder

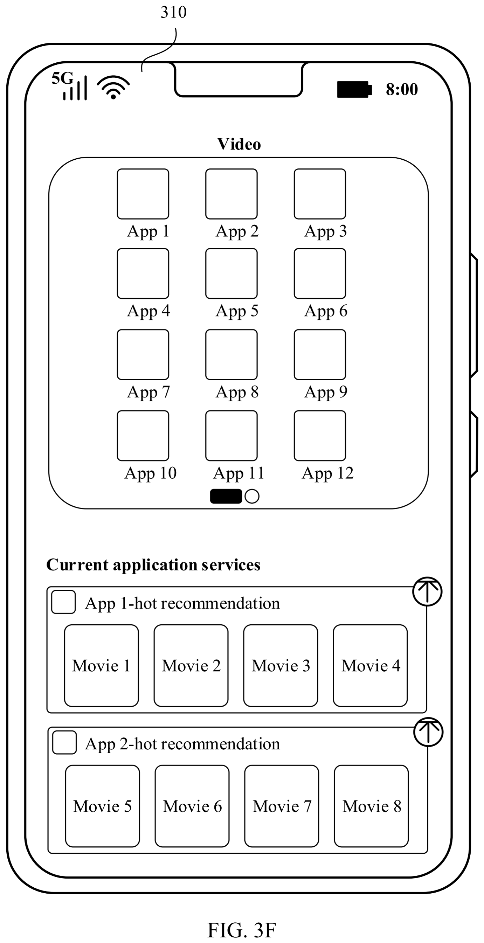

The electronic device 100 may not change the layout style of the icons of the applications in the folder, but, for example, as shown in FIG. 3F, reduce only display sizes of the icons of the applications in the folder. In this way, a display area occupied by the folder may also be reduced.

It can be learned that, in comparison with FIG. 3A, the layout style of the icons of the applications in the folder shown in FIG. 3F is not changed, the display sizes of the icons of the applications in the folder are reduced, and the display area occupied by the folder is reduced.

In some embodiments, when the display sizes of the icons of the applications in the folder are reduced, a distance between icons of different applications may also be reduced, to further reduce the display area occupied by the folder.

In some embodiments, when the layout style of the icons of the applications in the folder is changed, the display sizes of the icons of the applications in the folder may also be reduced, and/or the distance between icons of different applications may be reduced, to further reduce the display area occupied by the folder.

In this embodiment of this application, in addition to the application icon, the service widget may be added to the scenario-based folder. It is easy to understand that when the scenario-based folder includes the service widget, when the foregoing two manners are implemented, display (for example, a display position and a display size) of the service widget in the folder may also adaptively change accordingly.

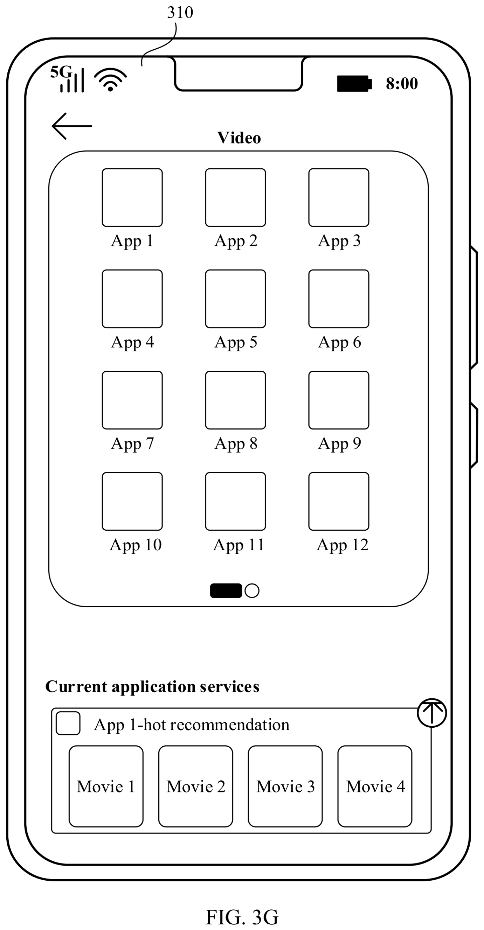

In some embodiments, after detecting the foregoing corresponding operation of the user, the electronic device 100 may not change the layout style of the icons of the applications in the folder, the display sizes, the distance, or the like of the icons of the applications in the folder, that is, does not change display of the folder. For example, as shown in FIG. 3G, a size and a position of a folder display area may remain unchanged, and the one or more service widgets associated with the applications in the folder are directly displayed in a blank area below the folder.

In some embodiments, the electronic device 100 may further reduce, by reducing a quantity of the icons of the applications displayed on the current page of the folder, the display area occupied by the folder.

Still refer to FIG. 3A. In this embodiment of this application, after detecting the corresponding operation of the user, the electronic device 100 may display the one or more service widgets associated with the applications in the folder. Refer to FIG. 3B. A style of 4*3 shown in FIG. 3B is used as an example. The electronic device 100 may display, in a blank display area below the folder, the one or more service widgets associated with the applications in the folder, for example, a service widget 321, a service widget 322, and a service widget 323. It can be learned that the service widget 321 and the service widget 322 are completely displayed, and because of a size of the screen of the electronic device 100, one part of the service widget 323 is displayed and the other part is hidden. The electronic device 100 may support the user to view, by performing a swipe-up operation, the hidden part of the service widget 323 and more other hidden service widgets. Details are described in subsequent embodiments and are not described herein.

It is easy to understand that for the one or more service widgets that are displayed by the electronic device 100 and that are associated with the applications in the folder, the user can not only quickly view the service widgets, but also can trigger, through a tap operation on a service widget, the electronic device 100 to display a user interface corresponding to the service widget. For example, the electronic device 100 may detect a tap operation of the user on the service widget 321 (namely, a service widget "App 1-hot recommendation") shown in FIG. 3B, and in response to the operation, the electronic device 100 may display a hot recommendation interface of the app 1.

Optionally, still refer to FIG. 3B. The electronic device 100 may display, on each service widget, an option (for example, an option 324 displayed on the service widget 321) used to pin the service widget on top for display, so that the user can pin a widget in which the user is interested on top for display, to facilitate quick viewing.

Optionally, still refer to FIG. 3B. The electronic device 100 may display an indicator 325 (for example, "Current application services"), to prompt the user that service widgets displayed below the indicator 325 are one or more service widgets provided by a part of or all the applications in the folder.

In embodiments of this application, there may be a plurality of manners for determining an arrangement sequence of the service widgets, including but not limited to the following three manners.

### 1. Determining based on the arrangement sequence of the icons of the applications in the folder

Still refer to FIG. 3B. For example, if the icon of the app 1 is arranged at a highest ranking position, a service widget provided by the app 1 is also arranged at a highest ranking position, a service widget provided by the app 2, a service widget provided by the app 3, ..., and a service widget provided by an app 12 may be arranged in sequence, and the service widget provided by the app 12 is arranged at a lowest ranking position.

It is easy to understand that, in an actual scenario, not every application provides a service widget. For example, the app 1, the app 2, and the app 4 each provide a service widget, and the app 3 does not provide a service widget. In this case, the service widget provided by the app 4 may be displayed after the service widgets provided by the app 1 and the app 2.

### 2. Determining based on a use habit of the user of the electronic device 100

For example, the electronic device 100 may obtain a quantity of times that the user uses an application in a preset time period (for example, one day, one week, or one month). A service widget provided by an application with a larger quantity of use times may be arranged at a higher ranking position.

For another example, the electronic device 100 may obtain a quantity of times that the user uses a service widget in a preset time period (for example, one day, one week, or one month). A service widget with a larger quantity of use times may be arranged at a higher ranking position.

### 3. Determining based on a cloud data analysis result

For example, the electronic device 100 may obtain, from a cloud, a large amount of data of the user using applications in the folder and service widgets provided by the applications, and then may determine an arrangement sequence of the service widgets based on an analysis result. For example, for an application that is frequently used, a service widget provided by the application may be arranged at a higher ranking position for display. For another example, for a service widget that is frequently used, the service widget may be arranged at a higher ranking position for display.

In some embodiments, because content on the service widget may be periodically updated, the electronic device 100 may also periodically update, based on a change of the content on the service widget, the ranking position of the service widget for display. For example, for a service widget of a hot recommendation type, the electronic device 100 may update a ranking position of the service widget based on a change of popularity of recommended content, where higher popularity indicates a higher ranking position. For another example, for a service widget of user data (for example, watching history or a quantity of movement steps), the electronic device 100 may update a ranking position of the service widget based on whether the data changes. If the data changes, the service widget may be arranged at a higher ranking position for display, so that the user can learn a change of the user data in time.

In some embodiments, the electronic device 100 may also arrange, for display, a service widget that is recently viewed by the user at a higher ranking position, so that the user may view the service widget again.

In this embodiment of this application, the style of 4*3 shown in FIG. 3B is used as an example. The user may view the hidden part of the service widget 323 and more other hidden service widgets by performing the swipe-up operation. Refer to FIG. 3B. The electronic device 100 may detect the swipe-up operation of the user on the user interface 310. Refer to FIG. 3H. In response to the operation, the electronic device 100 may display the part of content that is hidden before the operation (for example, the part that is of the service widget 323 and that is hidden in FIG. 3B is displayed in FIG. 3H), and may hide the part of content that has been displayed before the operation (for example, the icons that are of the part of applications in the folder and that are already displayed in FIG. 3B are hidden in FIG. 3H). In other words, the screen of the electronic device 100 may be equivalent to a sliding window, content in an area captured by the sliding window on the user interface 310 may be displayed on the screen, and content in an area outside the captured area may be hidden.

Similarly, still refer to FIG. 3H. The electronic device 100 may detect an operation of continually swiping up on the user interface 310 by the user. Refer to FIG. 3I. In response to the operation, the electronic device 100 may display the part of content that is hidden before the operation (for example, the service widget 331 and the service widget 332 that are hidden in FIG. 3H are displayed in FIG. 3I), and may hide the part of content that has been displayed before the operation (for example, the icons of all the applications in the folder that have been displayed in FIG. 3B are hidden in FIG. 3H).

Optionally, still refer to FIG. 3I. The electronic device 100 may display an indicator 333 (for example, "More services of a same type"), to prompt the user that one or more service widgets provided by one or more applications of a same type as the applications in the folder are displayed below the indicator 333. The electronic device 100 may detect an operation of continually swiping up on the user interface 310 by the user. Refer to FIG. 3J. In response to the operation, the electronic device 100 may display the part of content that is hidden before the operation (for example, the service widget 341 and the service widget 342 that are hidden in FIG. 3I are displayed in FIG. 3J), and may hide the part of content that has been displayed before the operation (for example, the folder and the service widget "App 1-hot recommendation" are completely hidden in FIG. 3J).

In other words, the user may perform the swipe-up operation, so that the electronic device 100 displays the service widgets in a scrolling manner, and the user can view all service widgets below the folder. It is easy to understand that, after the user views bottommost service widgets through the swipe-up operation, the user may return to view previous service widgets through a swipe-down operation. For example, in response to the swipe-down operation of the user, the electronic device 100 may return to display, for example, topmost service widgets shown in FIG. 3G. In other words, the user may perform the swipe-down operation, so that the electronic device 100 displays previously displayed service widgets in the scrolling manner, and the user can return to view the previously displayed service widgets. In some embodiments, after the electronic device 100 returns to display, for example, the topmost service widgets shown in FIG. 3G in response to the swipe-down operation of the user, if detecting an operation of continually swiping down by the user, the electronic device 100 may display, for example, the user interface shown in FIG. 3A, and hide all the service widgets.

It is easy to understand that, if the foregoing process in which the electronic device 100 is triggered to display the service widgets through the swipe-up operation is referred to as a display process 1, the foregoing process in which the electronic device 100 is triggered to return to display the previous service widgets through the swipe-down operation may be referred to as a reverse display process of the foregoing display process 1.

In some embodiments, after the electronic device 100 returns to display, for example, the topmost service widgets shown in FIG. 3G in response to the swipe-down operation of the user, if the user continues to perform the swipe-down operation, the electronic device 100 may also hide all the service widgets.

In some embodiments, the electronic device 100 may also support the user to manually update the service widgets below "Current application services" and the service widgets below "More services of a same type". For example, the electronic device 100 may display an update option, and the user may tap the update option to complete the update. The update may include updating an arrangement sequence, display content, a quantity, types, and the like of the service widgets. For example, for the service widgets below "More services of a same type", the user may perform a manual update operation, so that the electronic device 100 recommends and displays more new service widgets of the same type.

In some embodiments, if the electronic device 100 detects that the user removes an icon of an application in the folder, the electronic device 100 may also remove one or more service widgets provided by the application below "Current application services", and no longer display the service widgets.

In some embodiments, the electronic device 100 may assign a status memory function to the scenario-based folder. For example, if the layout style of the folder is changed after the user performs the swipe-up operation, after the user performs the swipe-down operation to make the electronic device 100 return to display the topmost service widgets, a changed layout style of the folder (for example, the style of 4*3 shown in FIG. 3B) may be restored to the layout style of the folder before the change (for example, the style of 3*4 shown in FIG. 3G).

In some embodiments, after the electronic device 100 detects an operation (for example, a tap operation) of the user on the icon 114 of the video folder shown in FIG. 3A, the electronic device 100 may alternatively directly display, for example, as shown in FIG. 3G, the one or more service widgets associated with the applications in the folder, instead of first displaying the user interface shown in FIG. 3A, and then displaying one or more service widgets associated with the applications in the folder after detecting the corresponding operation (for example, the swipe-up operation or the tap operation on the indicator 312 shown in FIG. 3A) of the user.

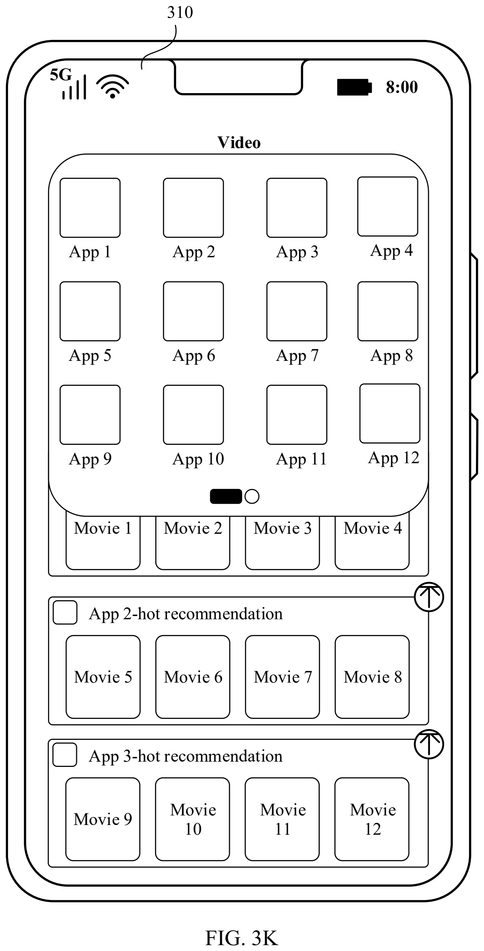

Refer to FIG. 3K. In some embodiments, the folder may alternatively be always displayed and not hidden, but content in a service widget display area below the folder is displayed or hidden along with the swipe-up and swipe-down operation of the user. In this way, when viewing the service widgets, the user may also view the icons of the applications in the folder. This is convenient for the user to tap an icon of an application at any time to enter the application.

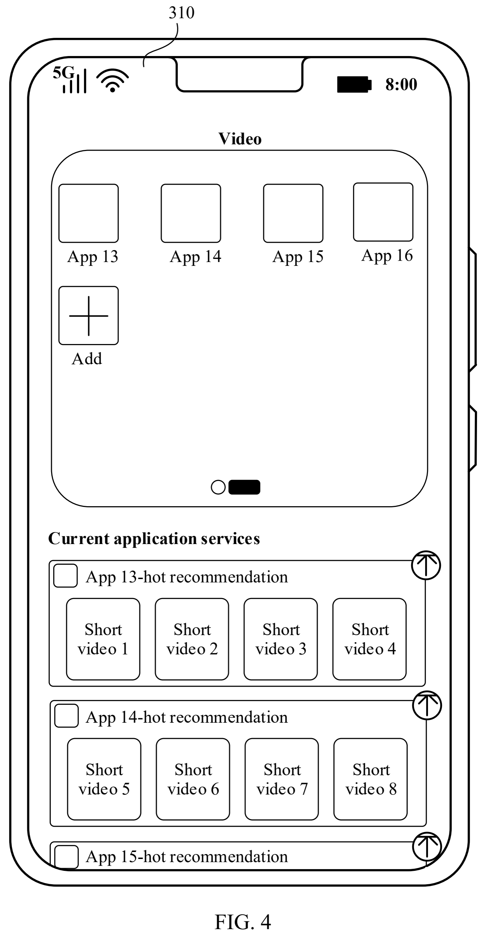

In this embodiment of this application, the electronic device 100 may display the icons of the applications and the service widgets in the folder on a plurality of pages. Still refer to FIG. 3A. It can be learned that the icon of the app 1 to the icon of the app 12 in the folder are displayed on the current page of the folder. The electronic device 100 may detect a leftward slide operation of the user on the folder. Refer to FIG. 4. In response to the operation, the electronic device 100 may display another page of the folder, and icons of more other applications (for example, an icon of an app 13 and an icon of an app 14) may be displayed on the page. Similarly, the user may view, through the swipe-up and swipe-down operation, the one or more service widgets associated with the applications in the folder. In some embodiments, the electronic device 100 may preferentially display one or more service widgets provided by one or more applications on the current page of the folder. In some other embodiments, the electronic device 100 may display only the one or more service widgets provided by the one or more applications on the current page of the folder, and does not display a service widget provided by an application on another page of the folder.

The foregoing embodiments describe a process in which the user views all the service widgets through the swipe-up and swipe-down operation. It is easy to understand that, when the user views all the service widgets through the swipe-up and swipe-down operation, all the service widgets as a whole form a vertically arranged queue. A length of the queue is greater than a length of the screen, and all the service widgets can be viewed only through the swipe-up and swipe-down operation.

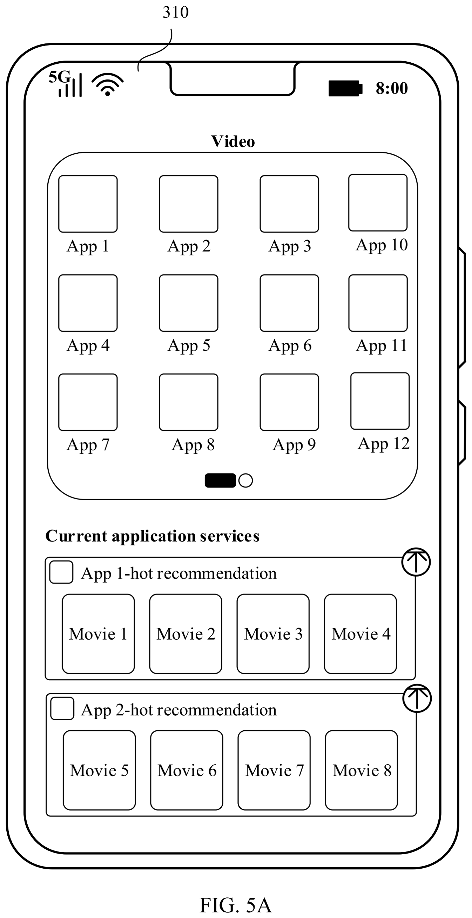

Refer to FIG. 5A to FIG. 5C. In some embodiments, the user may alternatively view all the service widgets through a leftward/rightward slide operation. It is easy to understand that, when all the service widgets are viewed through the leftward/rightward slide operation, all the service widgets as a whole form a horizontally arranged queue. A length of the queue is greater than a width of the screen, and all the service widgets can be viewed only through the leftward/rightward slide operation.

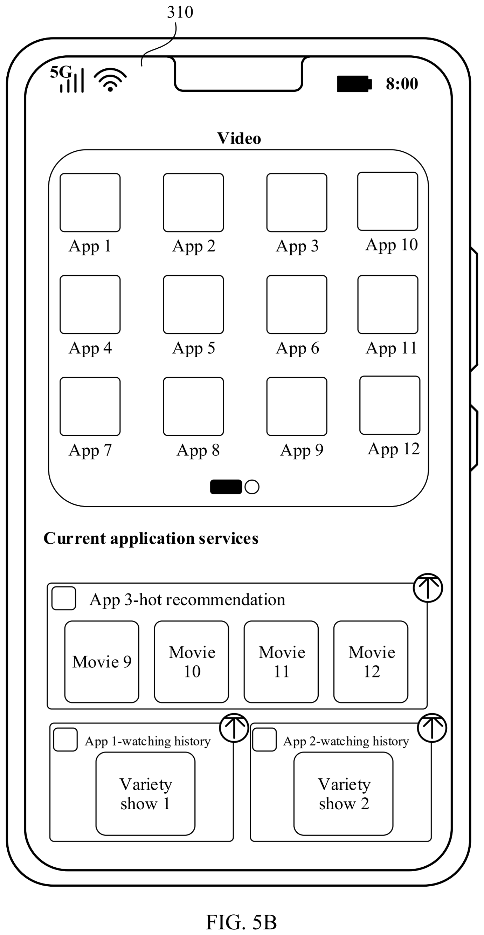

For example, refer to FIG. 5A. A service widget (for example, an "App 1-hot recommendation" service widget or an "App 2-hot recommendation" service widget) shown in FIG. 5A may be a service widget that is arranged at a highest ranking position. The electronic device 100 may detect a leftward slide operation of the user. Refer to FIG. 5B. In response to the operation, the electronic device 100 may display more other service widgets (for example, an "App 3-hot recommendation" service widget, an "App 1-watching history" service widget, and an "App 2-watching history" service widget) arranged after the service widget shown in FIG. 5A.

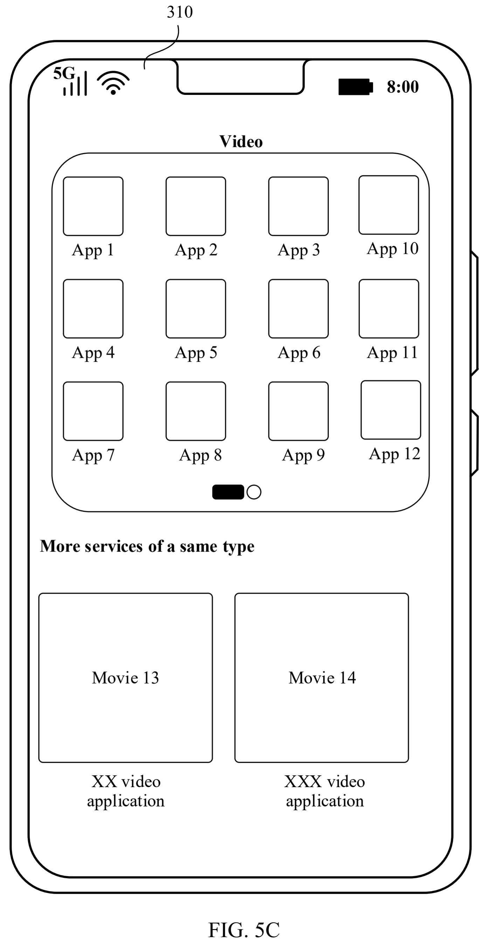

Similarly, still refer to FIG. 5B. The electronic device 100 may detect an operation of continually swiping leftward by the user. Refer to FIG. 5C. In response to the operation, the electronic device 100 may display more other service widgets (for example, service widgets provided by "XX video application" and "XXX video application" that are of a same type as the applications in the folder) arranged after the service widget shown in FIG. 5B. It is easy to understand that, after viewing, through a leftward slide operation, the service widget that is arranged at a lowest ranking position, the user may return to view the previous service widget through a rightward slide operation.

In embodiments shown in FIG. 5A to FIG. 5C, the folder may be always displayed, and is not hidden with the slide operation of the user.

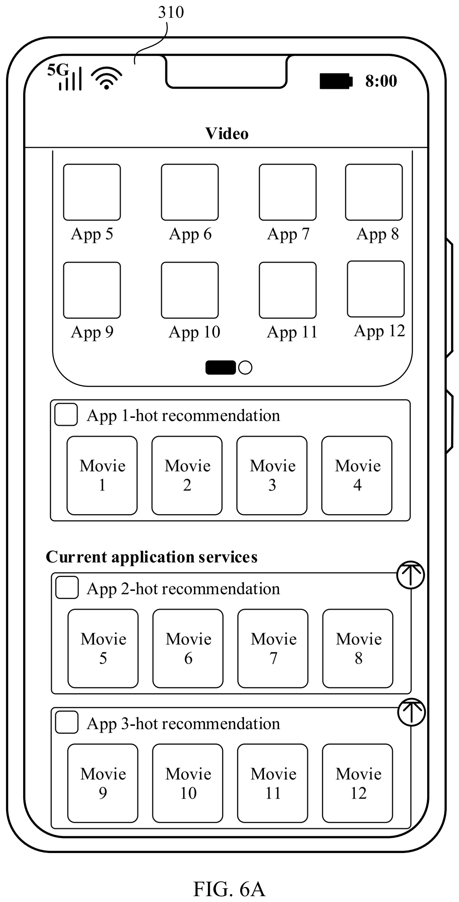

**With reference to** **FIG. 6A to FIG. 6E****,** **FIG. 7A to FIG. 7G****, and** **FIG. 8A to FIG. 8E****, the following describes in detail a series of example user interfaces involved in a process in which the user performs an editing operation (for example, an operation such as pinning, removing, adding to the desktop, or adding to a folder) on a service widget by using the scenario-based folder interaction method provided in embodiments of this application.**

### 1. Pinning a service widget

In embodiments of this application, the electronic device 100 can support the user to pin the one or more service widgets associated with the applications in the scenario-based folder. The "pinning" may mean that the electronic device 100 arranges a service widget in which the user is interested at a highest ranking position for display, so that the user can quickly view the service widget in time. The "pinning" may also be referred to as favoriting, following, or the like. A name of the "pinning" is not limited in embodiments of this application. It should be noted that, in embodiments of this application, a top display position (namely, a pinned position) of the service widget is not specifically limited. For example, the position may be a topmost position in an entire service widget display area, or may be a topmost position on an entire interface.

For example, refer to FIG. 3B. The user may perform a tapping operation on an option (for example, an option 324 displayed on the service widget 321) that is displayed on a service widget and that is used to pin the service widget on top for display to pin the service widget. An example in which the service widget 321 is pinned is used. The electronic device 100 may detect a tap operation of the user on the option 324. Refer to FIG. 6A. In response to the operation, the electronic device 100 may pin the service widget 321 (namely, the "App 1-hot recommendation" service widget) on top for display. It can be learned that the service widget 321 is displayed above "Current application services", that is, the service widget 321 is displayed above all other service widgets. In this way, when entering the interface, the user can view content displayed on the service widget in time, and does not need to search for the service widget through the slide operation. This is convenient and quick.

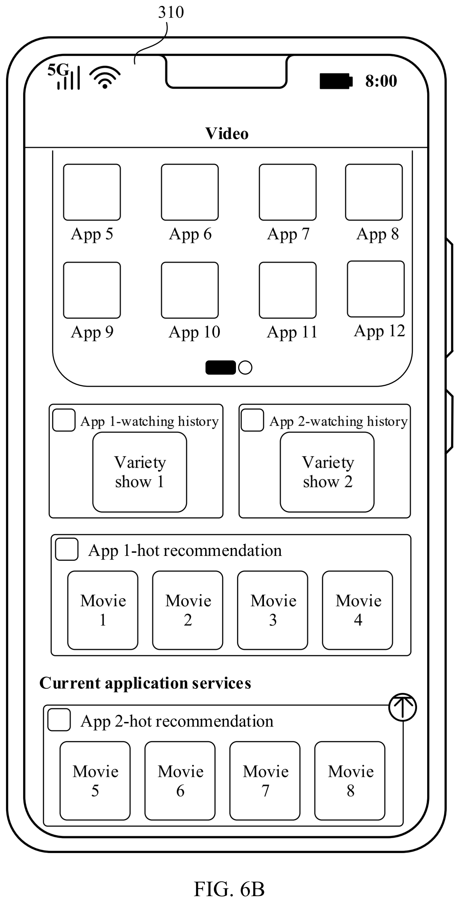

Similarly, the user may also pin more service widgets (for example, another service widget below "Current application services" and a service widget below "More services of a same type"). For example, refer to FIG. 6B. It can be seen that, in addition to the "App 1-hot recommendation" service widget, the user pins the "App 1-watching history" service widget and the "App 2-watching history" service widget.

In embodiments of this application, there may be a plurality of manners for determining an arrangement order of the pinned service widgets. For example, after the user performs a pin-on-top operation, a service widget corresponding to the pin-on-top operation may be arranged at a higher ranking position than that of another pinned service widget for display. For another example, after the user performs a pin-on-top operation, a service widget corresponding to the pin-on-top operation may be arranged at a lower ranking position than that of another pinned service widget for display. For another example, for a plurality of pinned service widgets, an arrangement order of the service widgets may alternatively be updated periodically (for example, when display content of a service widget is updated, the service widget may be arranged at a highest ranking position for display).

In some embodiments, in addition to performing the tap operation on the option that is displayed on the service widget and that is used to pin the service widget on top for display, the user may pin the service widget in another manner.

For example, still refer to FIG. 3B. The service widget 321 is used as an example. The electronic device 100 may detect an operation (for example, a touch and hold operation) of the user on the service widget 321. Refer to FIG. 6C. In response to the operation, the electronic device 100 may display a window 610. The window 610 may include one or more options, for example, an option 611, and the option 611 may be used to pin the service widget or unpin the service widget. The electronic device 100 may detect an operation (for example, a tap operation) of the user on the option 611. Refer to FIG. 6A. In response to the operation, the electronic device 100 may pin the service widget 321 (namely, the "App 1-hot recommendation" service widget) on top for display.

In embodiments of this application, for a pinned service widget, there may also be a plurality of manners of unpinning the service widget. For example, the user may touch and hold the service widget to trigger display of the option 611 shown in FIG. 6C, and tap the option 611 to unpin the service widget. For another example, the user may touch and hold and drag the service widget downward to an area (for example, an area below "Current application services") outside a pin area, to unpin the service widget. For another example, the electronic device 100 may also display an unpin option (not shown in the figure) on the pinned service widget, and the user can tap the unpin option to unpin the service widget.

### 2. Removing a service widget

In embodiments of this application, the electronic device 100 can support the user to remove the one or more service widgets associated with the applications in the scenario-based folder. In this way, the user can remove a service widget in which the user is not interested and retain only a service widget in which the user is interested in.

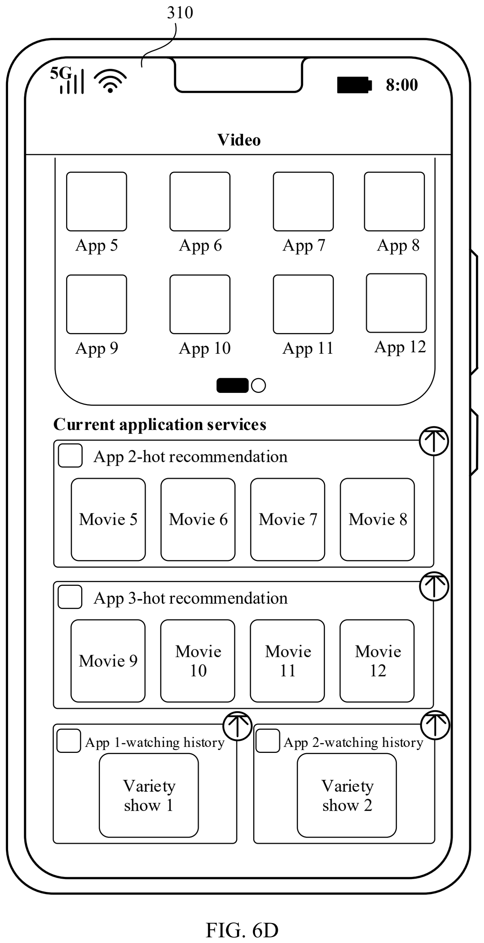

Similarly, an example in which the service widget 321 in FIG. 3B is removed is used. For example, still refer to FIG. 6C. The window 610 may further include an option 612, and the option 612 may be used to remove the service widget. The electronic device 100 may detect an operation (for example, a tap operation) of the user on the option 612. Refer to FIG. 6D. In response to the operation, the electronic device 100 may remove the service widget 321 (namely, the "App 1-hot recommendation" service widget) and no longer display the service widget.

In some embodiments, it is considered that the user may have different interest degrees for the service widgets in different time periods, the electronic device 100 may also support the user to re-add the removed service widget. In a possible implementation, the electronic device 100 may periodically prompt the user whether the removed service widget needs to be re-added. If the removed service widget needs to be re-added, the electronic device 100 may re-add the removed service widget, so that the user can view the service widget. In another possible implementation, the electronic device 100 may provide an interface (for example, similar to an interface of recent deletion in a gallery application) for displaying the removed service widget, and the user may perform a corresponding operation on the interface to re-add the removed service widget.

### 3. Adding a service widget to the desktop

In embodiments of this application, the electronic device 100 can support the user to add, to the desktop for display, the one or more service widgets associated with the applications in the scenario-based folder. In this way, the user can view the service widget in which the user is interested on the desktop, and does need to expand the folder to view the service widget in which the user is interested.

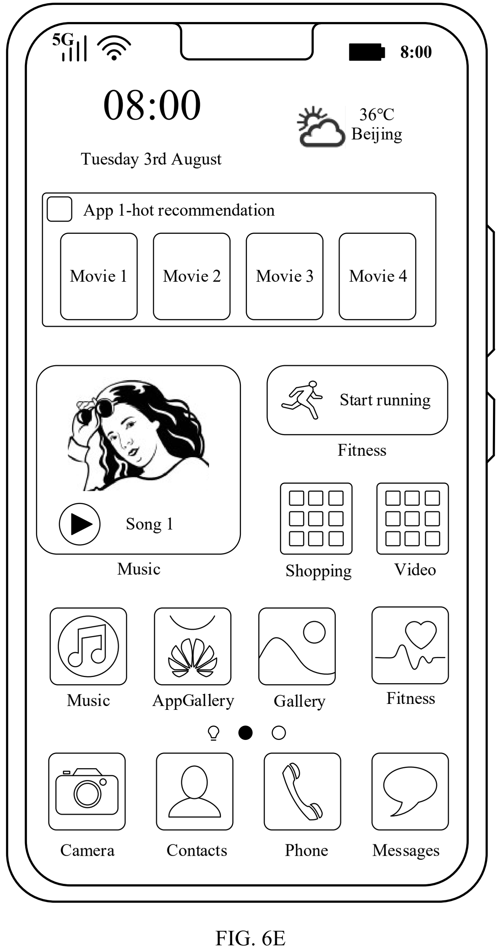

Similarly, an example in which the service widget 321 in FIG. 3B is added to the desktop is used. For example, still refer to FIG. 6C. The window 610 may further include an option 613, and the option 613 may be used to add the service widget to the desktop. The electronic device 100 may detect an operation (for example, a tap operation) of the user on the option 613. Refer to FIG. 6E. In response to the operation, the electronic device 100 may add the service widget 321 (namely, the "App 1-hot recommendation" service widget) to the desktop for display.

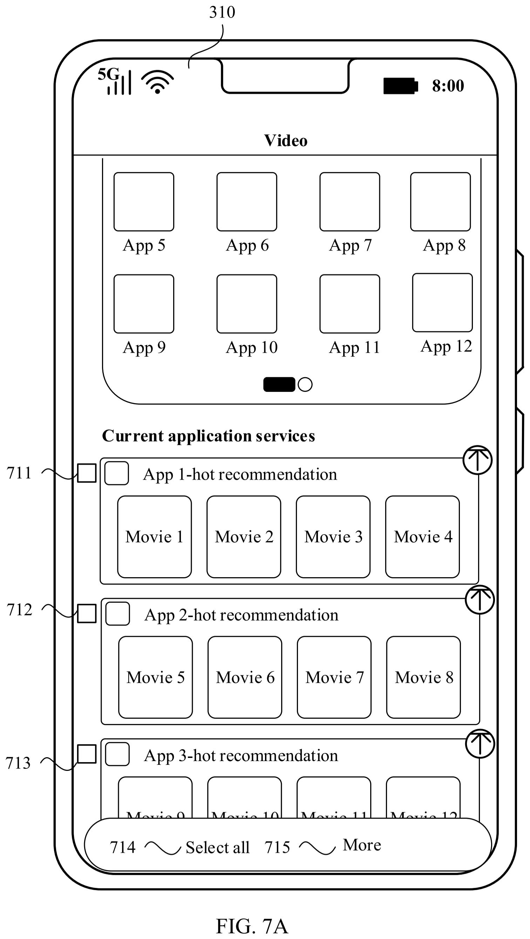

**Embodiments shown in** **FIG. 6A to FIG. 6E** **describe a process in which the user performs the editing operation on a single service widget. In some embodiments, the electronic device 100 may also support the user to perform an editing operation on a plurality of service widgets at the same time. The following provides detailed descriptions with reference to** **FIG. 7A to FIG. 7G****.**

The electronic device 100 may detect a specific operation of the user. Refer to FIG. 7A. In response to the operation, the electronic device 100 may set all service widgets to a to-be-selected state, and a to-be-selected box (for example, the "App 1-hot recommendation" service widget corresponds to a to-be-selected box 711, the "App 2-hot recommendation" service widget corresponds to a to-be-selected box 712, and the "App 3-hot recommendation" service widget corresponds to a to-be-selected box 713) may be correspondingly displayed on each service widget. The electronic device 100 may further display an option 714, the option 714 may be used to select all the service widgets in one tap, and the user may tap the option to set all the service widgets to a selected state.

It is easy to understand that the "specific operation of the user" may be used to trigger the electronic device 100 to set all the service widgets to the to-be-selected state. The specific operation may be, for example, a touch and hold operation of the user on a service widget. This is not limited in embodiments of this application.

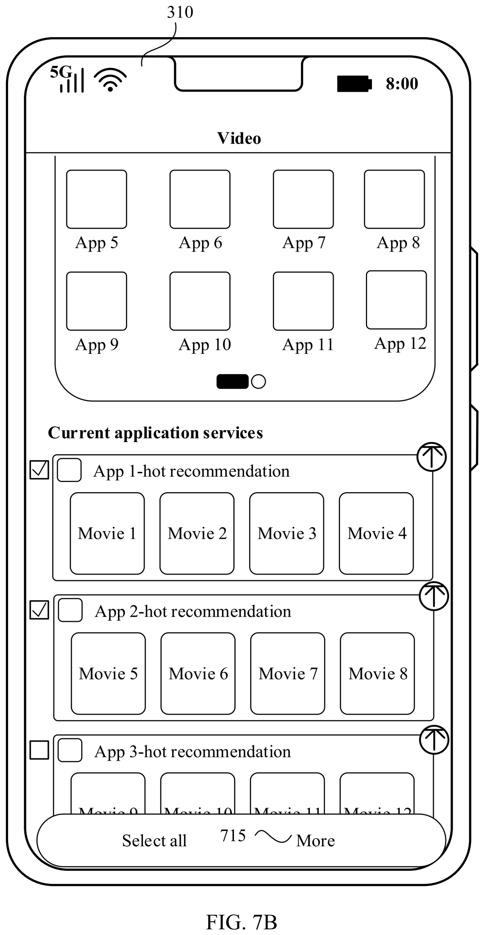

Still refer to FIG. 7A. The user may select one or more service widgets to perform an editing operation on the service widgets. For example, the user selects two service widgets: "App 1-hot recommendation" and "App 2-hot recommendation" to perform the editing operation. The electronic device 100 may detect separate operations (for example, tap operations) of the user on the to-be-selected box 711 and the to-be-selected box 712. Refer to FIG. 7B. In response to the operation, the electronic device 100 may set the two service widgets "App 1-hot recommendation" and "App 2-hot recommendation" to the selected state. In this case, an indicator (for example, a "√" indicator) of the selected state may be displayed in the to-be-selected box 711 and the to-be-selected box 712.

In some embodiments, when the "specific operation of the user" is a touch and hold operation of the user on a service widget, the service widget may be directly set to the selected state, and the user does not need to select the service widget through a manual operation again.

Still refer to FIG. 7B. The electronic device 100 may further display an option 715, and the option 715 may be used to perform more editing operations on the one or more selected service widgets. After the user selects the service widgets on which the editing operation is to be performed, the electronic device 100 may detect an operation (for example, a tap operation) of the user on the option 715. Refer to FIG. 7C. In response to the operation, the electronic device 100 may display a window 720, and the window 720 may include one or more options (for example, an option 721, an option 722, and an option 723). The option 721 may be used to perform a pin-on-top/unpin operation on the selected one or more service widgets, the option 722 may be used to perform a remove operation on the selected one or more service widgets, and the option 723 may be used to add the selected one or more service widgets to the desktop. For example, if the service widgets selected by the user are "App 1-hot recommendation" and "App 2-hot recommendation", after detecting an operation (for example, a tap operation) of the user on an option in the window 720, in response to the operation, the electronic device 100 may simultaneously pin/unpin, or remove, or add, to the desktop, the two service widgets "App 1-hot recommendation" and "App 2-hot recommendation".

It can be learned that, in comparison with the foregoing manner of sequentially performing the editing operation on a single service widget, the manner of selecting the service widgets in batches and performing the editing operation in a unified manner can simplify user operations, improve editing efficiency, and bring convenient and quick experience to the user.

In some embodiments, the electronic device 100 may further support the user to combine a plurality of service widgets to generate a combined widget.

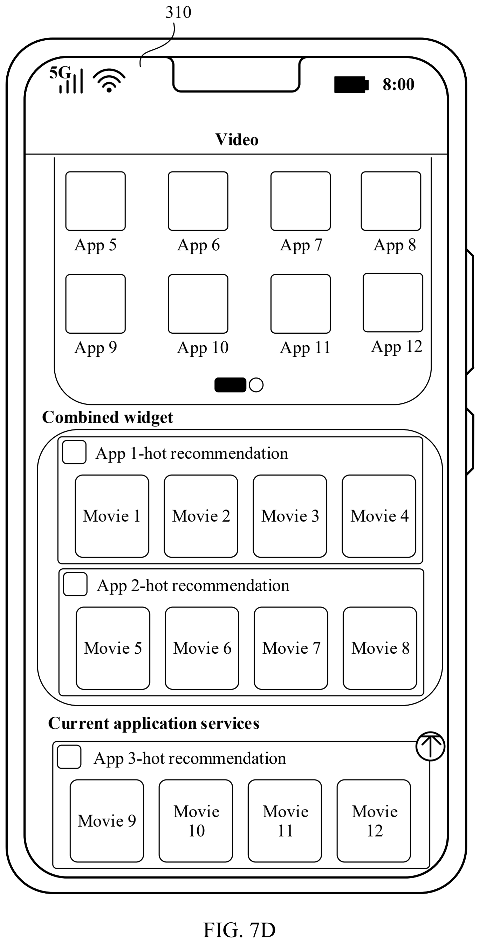

For example, the user may combine service widgets that are of a same type and that are provided by different applications (for example, two service widgets of a hot recommendation type "App 1-hot recommendation" and "App 2-hot recommendation" shown in FIG. 7D) to generate a combined widget. In this way, the user can quickly learn information that is of the same type and that is provided by a plurality of different applications, can quickly compare differences between the information, and does need to start the different applications one by one to view and compare the information. This is convenient and quick.

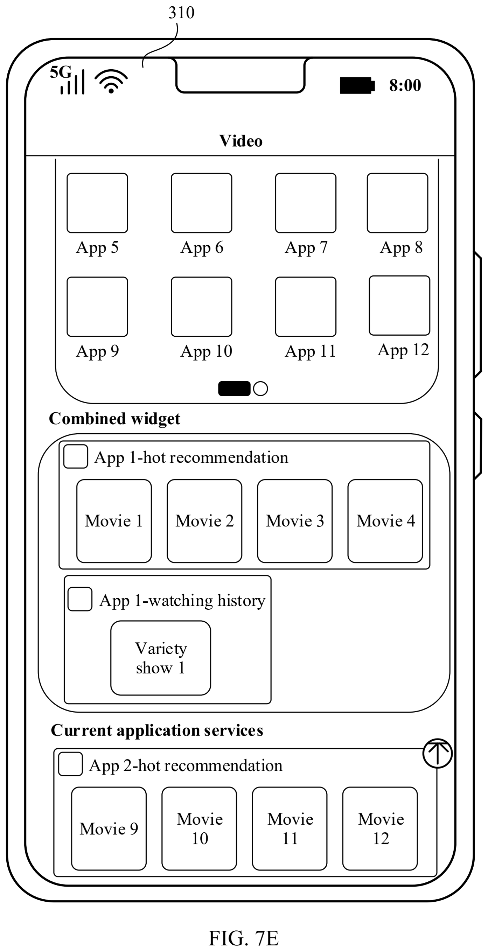

For another example, the user may combine different types of service widgets provided by a same application (for example, two service widgets "App 1-hot recommendation" and "App 1-watching history" shown in FIG. 7E) to generate a combined widget. In this way, for an application in which the user is interested, the user can directly combine a plurality of service widgets provided by the application, so that the user can conveniently and quickly view the plurality of service widgets provided by the application.

For another example, the user may combine a plurality of service widgets that can share information, to generate a combined widget, so as to implement function linkage. For example, the combined widget is generated by combining a "Calendar" service widget and a "Daily video recommendation" service widget. The "Calendar" service widget may include date information, and the "Daily video recommendation" service widget may also include date information. The two service widgets may share date information. For example, on a holiday, the "Daily video recommendation" service widget may recommend a video related to the holiday.

It can be seen that, for the combined widget, in one aspect, it is convenient for the user to classify a plurality of service widgets and quickly view a service widget required by the user. In another aspect, function linkage can be implemented, and full-scenario experience is provided for the user. This is flexible and convenient, and meets a personalized requirement of the user.

There may be a plurality of implementations of generating a combined widget. For example, a combined widget may be generated in the manner shown in FIG. 7A to FIG. 7C. In this manner, the user may first select a plurality of to-be-combined service widgets, and then tap the option 715 shown in FIG. 7B. The electronic device 100 may display a combine option (not shown in the figure) in the window 720 shown in FIG. 7C, and the user may tap the combine option, to generate a combined widget. For another example, a combined widget may be generated by touching and holding and dragging the service widget. In this manner, the user may first touch and hold and drag one service widget to another service widget, to generate a combined widget generated by combining the two service widgets. Further, the user may further touch and hold and drag more other service widgets to the combined widget, to generate a combined widget generated by combining more than two service widgets.

In some embodiments, the electronic device 100 may further support the user to perform an editing operation (for example, an operation of canceling combination or adding to the desktop) on the combined widget.

For example, an editing operation is performed on a combined widget shown in FIG. 7D. The electronic device 100 may detect an operation (for example, a touch and hold operation) of the user on the combined widget. Refer to FIG. 7F. In response to the operation, the electronic device 100 may display a window 730. The window 730 may include one or more options (for example, an option 731 and an option 732), the option 731 may be used to cancel combination of service widgets included in the combined widget, and the option 732 may be used to add the combined widget to the desktop.

Still refer to FIG. 7F. For example, the electronic device 100 may detect an operation (for example, a tap operation) of the user on the option 731. In response to the operation, the electronic device 100 may cancel combination of a plurality of service widgets included in the combined widget, no longer display the combined widget, and may restore, to positions before combination for display, the plurality of service widgets included in the combined widget.

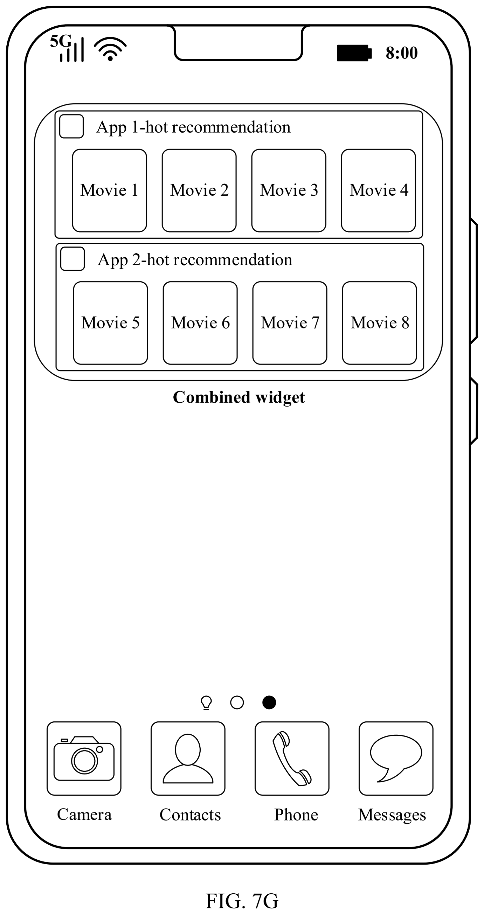

Still refer to FIG. 7F. For example, the electronic device 100 may detect an operation (for example, a tap operation) of the user on the option 732. Refer to FIG. 7G. In response to the operation, the electronic device 100 may add the combined widget to the desktop for display.

The combined widget added to the desktop for display may no longer be displayed on a user interface shown in FIG. 7F, or may continue to be displayed on the user interface shown in FIG. 7F. This is not limited in embodiments of this application.

The combined widget added to the desktop for display may be displayed in a tiled manner shown in FIG. 7G, or may be displayed in a stacked manner. A display manner of the combined widget is not limited in embodiments of this application.

A name of the combined widget may be set by the system, or may be customized by the user. This is not limited in embodiments of this application.

In some embodiments, the electronic device 100 may further support the user to share the service widget. For example, the electronic device 100 may display a share option (not shown in the figure) in the window shown in FIG. 6C, and/or the window shown in FIG. 7C, and/or the window shown in FIG. 7F, to support the user to share the service widget to a social application, another electronic device (for example, an electronic device of a friend), and the like.

### 4. Adding a service widget to a scenario-based folder

In embodiments of this application, the electronic device 100 may support the user to add the service widget to the scenario-based folder.

In some embodiments, the electronic device 100 may support the user to add, to the scenario-based folder, the service widget that is added to the desktop for display. In this way, some service widgets (for example, service widgets related to private information of the user) that are not suitable to be added to the desktop for display are added to the scenario-based folder, to enhance privacy and avoid a trouble that user privacy is easily leaked.

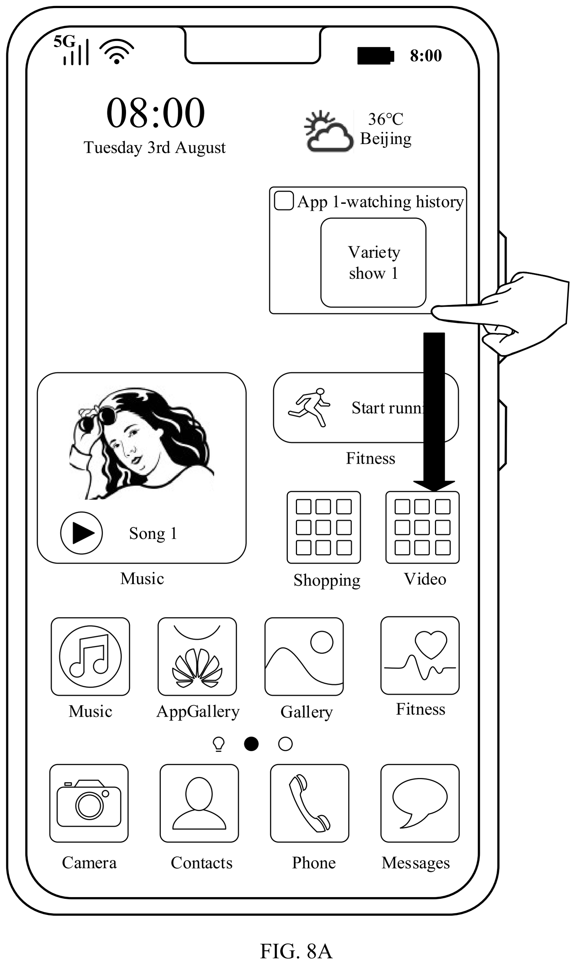

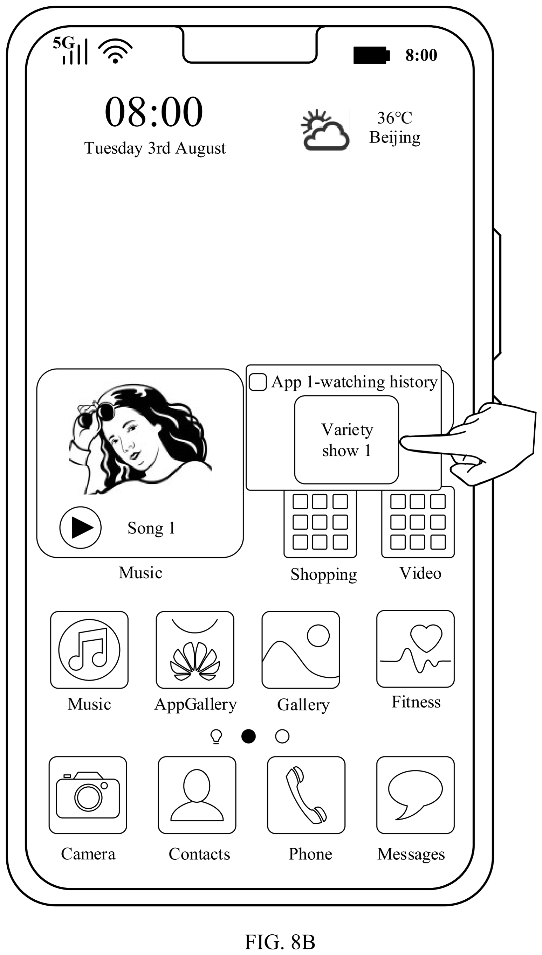

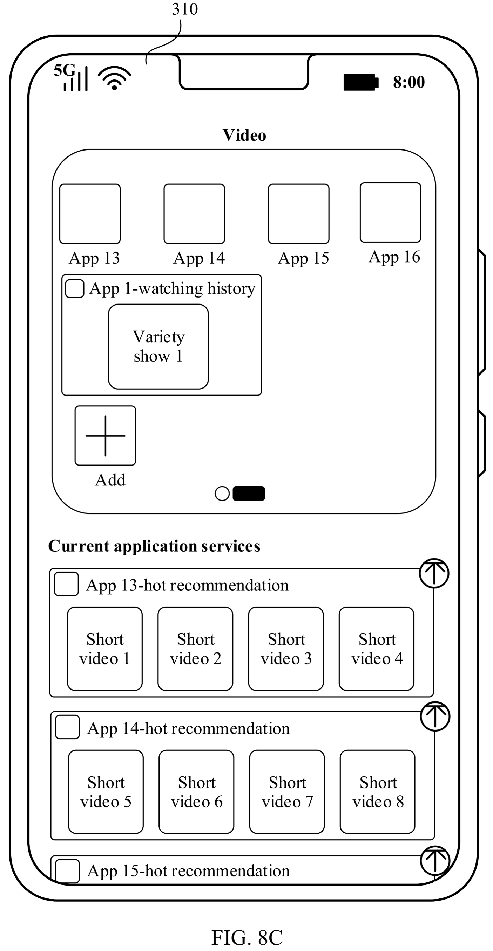

For example, refer to FIG. 8A and FIG. 8B. An example in which the service widget "App 1-watching history" is added to the scenario-based folder, namely, a video folder, is used. The electronic device 100 may detect an operation of touching and holding and dragging, by the user, the service widget "App 1-watching history" to an icon of the video folder or a preset distance near the icon. Refer to FIG. 8C. In response to the operation, the electronic device 100 may add the service widget "App 1-watching history" to the video folder from the desktop, and display the service widget "App 1-watching history" in the video folder instead of displaying the service widget "App 1-watching history" on the desktop.

A trajectory of touching and holding and dragging the service widget may be a straight line, or may be a curve. This is not limited in embodiments of this application.

In some embodiments, the electronic device 100 may also support the user to perform a touch and hold and drag operation on an icon of an application or a service widget displayed on the desktop, to generate and display, on the desktop, a scenario-based folder that includes only the icon of the application and the service widget. For example, the icon of the application is touched and held and dragged to the service widget or a preset distance near the service widget, to generate and display, on the desktop, a scenario-based folder that includes only the icon of the application and the service widget. For another example, the service widget is touched and held and dragged to the icon of the application or a preset distance near the icon of the application, to generate and display, on the desktop, a scenario-based folder that includes only the icon of the application and the service widget.

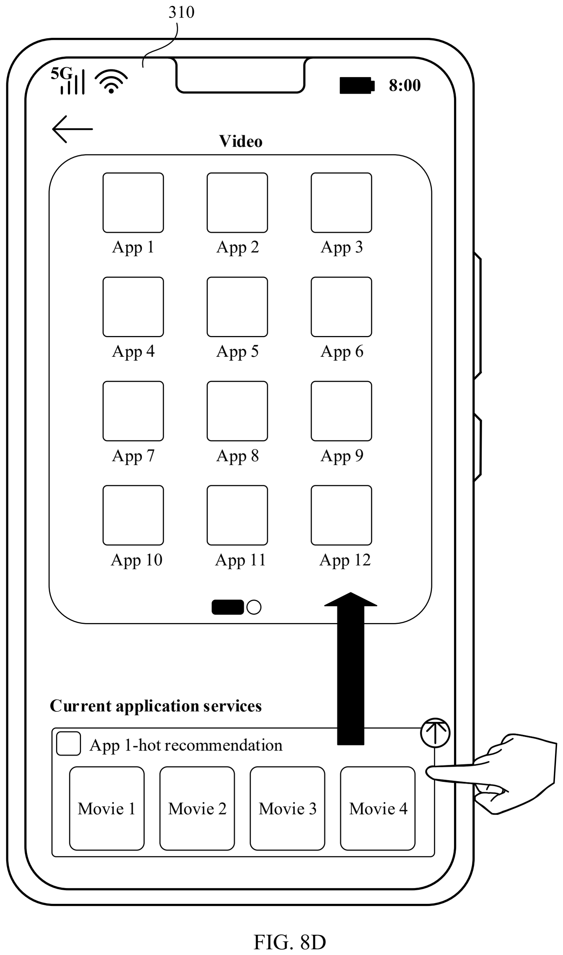

In some embodiments, the electronic device 100 may also support the user to add, on a user interface (for example, a user interface shown in FIG. 8D) obtained by expanding the scenario-based folder, one or more service widgets associated with an application in the scenario-based folder to the scenario-based folder. In this way, the user does not need to move the service widget from the desktop to the scenario-based folder after adding the service widget to the desktop. This is convenient and quick, and simplifies user operations.

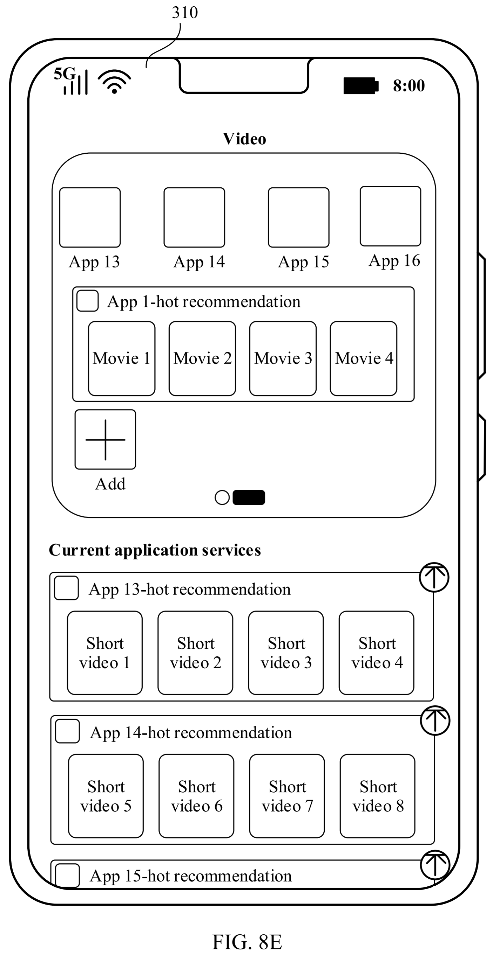

For example, refer to FIG. 8D. An example in which the service widget "App 1-hot recommendation" is added to the scenario-based folder, namely, the video folder is used. The electronic device 100 may detect an operation of touching and holding and dragging, by the user, the service widget "App 1-hot recommendation" to a display area in which the video folder is located. Refer to FIG. 8E. In response to the operation, the electronic device 100 may add the service widget "App 1-hot recommendation" to the video folder for display.

A trajectory of touching and holding and dragging the service widget may be a straight line, or may be a curve. This is not limited in embodiments of this application.

In some embodiments, in addition to the manner shown in FIG. 8D, there may be more other manners for adding the service widget to the scenario-based folder on the user interface obtained by expanding the scenario-based folder.

For example, still refer to FIG. 6C. The electronic device 100 may display an add to folder option (not shown in the figure) in the window 610 shown in FIG. 6C, and the user may tap the option to add a corresponding service widget to the current scenario-based folder.

For another example, still refer to FIG. 7C. The electronic device 100 may display an add to folder option (not shown in the figure) in the window 720 shown in FIG. 7C, and the user may tap the option to add one or more selected service widgets to the current scenario-based folder.

In some embodiments, for the service widget added to the scenario-based folder, the electronic device 100 may further support the user to adjust a display position, a display size, and the like of the service widget in the folder, to meet a personalized requirement of the user.

The following describes a diagram of a structure of an electronic device 100 according to an embodiment of this application.

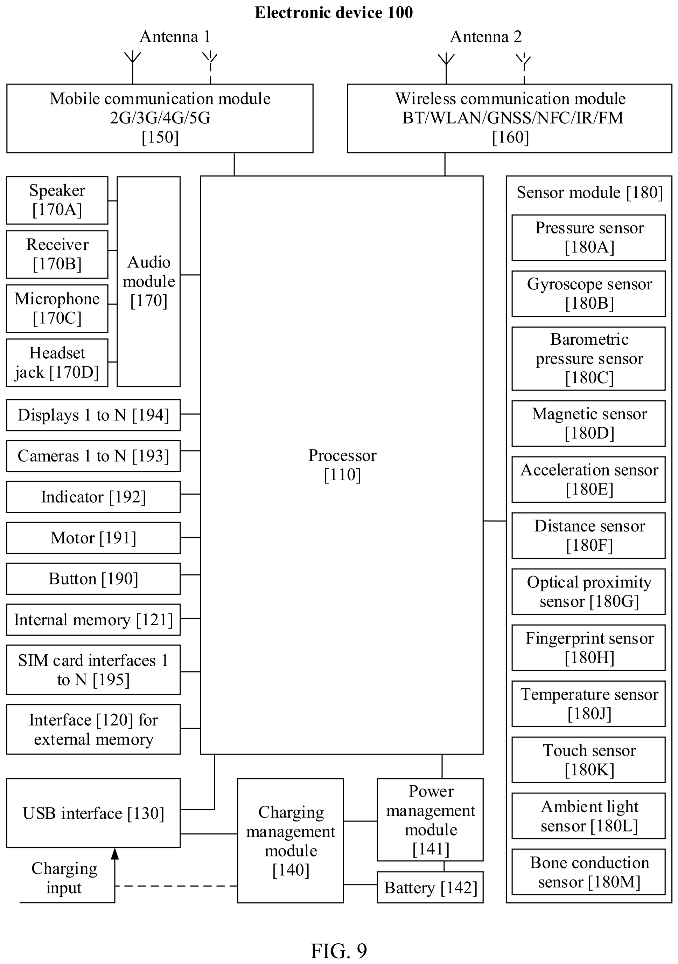

**FIG. 9** **shows an example of a structure of an electronic device 100 according to an embodiment of this application.**

As shown in FIG. 9, the electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to control instruction fetching and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and encode an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement an image shooting function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. Alternatively, the interface may be configured to be connected to another terminal device, for example, an AR device.

It may be understood that an interface connection relationship between the modules illustrated in embodiments of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. When charging the battery 142, the charging management module 140 may further supply power to the electronic device 100 through the power management module 141.

The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video on the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (Beidou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement an image shooting function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness and the like of the image. The ISP may further optimize parameters such as exposure and a color temperature of an image shooting scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transmission mode between human brain neurons, and may further continuously perform self-learning. Applications such as intelligent cognition of the electronic device 100 may be implemented through the NPU, for example, image recognition, facial recognition, speech recognition, and text understanding.

The interface 120 for external memory may be configured to connect to an external memory card, for example, a micro SD card, to extend a storage capability of the electronic device 100. The external memory card communicates with the processor 110 through the interface 120 for external memory, to implement a data storage function. For example, files such as music and videos are stored in the external memory card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a sound playing function or an image playing function), and the like. The data storage area may store data (such as audio data and an address book) created during use of the electronic device 100, and the like. In addition, the internal memory 121 may include a high-speed random access memory, and may further include a nonvolatile memory, for example, at least one magnetic disk storage device, a flash storage device, and a universal flash storage (universal flash storage, UFS).

The electronic device 100 may implement an audio function through the audio module 170, the speaker 170A, the receiver 170B, the microphone 170C, the headset jack 170D, the application processor, for example, music playing and recording.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be configured to listen to music or answer a hands-free call through the speaker 170A.

The receiver 170B, also referred to as an "earpiece", is configured to convert an audio electrical signal into a sound signal. When a call is answered or voice information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation based on the pressure sensor 180A. The electronic device 100 may also calculate a touch position based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on a messages application icon, an instruction for viewing an SMS message is performed. When a touch operation whose touch operation intensity is greater than or equal to the first pressure threshold is performed on the messages application icon, an instruction for creating a new SMS message is performed.

The gyroscope sensor 180B may be configured to determine a motion posture of the electronic device 100. In some embodiments, an angular velocity of the electronic device 100 around three axes (namely, axes x, y, and z) may be determined by using the gyroscope sensor 180B. The gyroscope sensor 180B may be configured to implement image stabilization during image shooting. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The acceleration sensor 180E may detect accelerations of the electronic device 100 in various directions (usually on three axes). When the electronic device 100 is still, a magnitude and a direction of gravity may be detected. The acceleration sensor may be further configured to identify a posture of the electronic device 100, and is used in an application such as switching between landscape mode and portrait mode or a pedometer.

The fingerprint sensor 180H is configured to collect a fingerprint. The electronic device 100 may use a feature of the collected fingerprint to implement fingerprint-based unlocking, application lock access, fingerprint-based image shooting, fingerprint-based call answering, and the like.

The touch sensor 180K is also referred to as a "touch panel". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor 180K. The touch sensor may transfer the detected touch operation to the application processor to determine a type of a touch event. A visual output related to the touch operation may be provided through the display 194. In some other embodiments, the touch sensor 180K may alternatively be disposed on a surface of the electronic device 100 at a position different from that of the display 194.

The button 190 includes a power button, a volume button, and the like. The button 190 may be a mechanical button, or may be a touch button. The electronic device 100 may receive a button input, and generate a button signal input related to user setting and function control of the electronic device 100.

The motor 191 may generate a vibration prompt. The motor 191 may be configured to provide an incoming call vibration prompt and a touch vibration feedback. For example, touch operations performed on different applications (for example, image shooting and audio playing) may correspond to different vibration feedback effect. The motor 191 may also correspond to different vibration feedback effect for touch operations performed on different areas of the display 194. Different application scenarios (for example, time reminding, information receiving, an alarm clock, and a game) may also correspond to different vibration feedback effect. Touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The electronic device 100 interacts with a network through the SIM card, to implement functions such as conversation and data communication. In some embodiments, the electronic device 100 uses an eSIM, namely, an embedded SIM card. The eSIM card may be embedded into the electronic device 100, and cannot be separated from the electronic device 100.

It should be understood that the electronic device 100 shown in FIG. 9 is merely an example, and the electronic device 100 may have more or fewer components than those shown in FIG. 9, may combine two or more components, or may have different component configurations. The components shown in FIG. 9 may be implemented in hardware including one or more signal processing and/or application-specific integrated circuits, software, or a combination of hardware and software.

All or a part of the foregoing embodiments may be implemented by software, hardware, firmware, or any combination thereof. When software is used to implement embodiments, all or a part of embodiments may be implemented in a form of computer program product. The computer program product includes one or more computer instructions. When the computer program instructions are loaded and executed on the computer, the procedure or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, microwave, or the like) manner. The computer-readable storage medium may be any usable medium accessible by a computer, or a data storage device, like a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may understand that all or a part of the procedures of the methods in the foregoing embodiments may be implemented by a computer program instructing related hardware. The program may be stored in a computer-readable storage medium. When the program is executed, the procedures of the methods in embodiments may be performed. The storage medium includes any medium that can store program code, for example, a ROM, a random access memory RAM, a magnetic disk, or a compact disc.

The foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

## Claims

1. An interaction method, wherein the method comprises:
displaying, by an electronic device, a first user interface, wherein the first user interface comprises an icon of a first folder;
detecting, by the electronic device, a first operation of a user on the icon of the first folder; and
displaying, by the electronic device, a second user interface in response to the first operation, wherein icons of one or more applications comprised in the first folder and one or more service widgets associated with the first folder are displayed on the second user interface.

2. The method according to claim 1, wherein the method further comprises:
detecting, by the electronic device, a second operation of the user on the second user interface; and
displaying, by the electronic device, all or a part of hidden service widgets in response to the second operation.

3. The method according to claim 2, wherein displaying, by the electronic device, all or the part of the hidden service widgets in response to the second operation specifically comprises:
enlarging, by the electronic device, a service widget display area in response to the second operation, wherein an enlarged service widget display area is used to display a larger quantity of service widgets.

4. The method according to claim 2 or 3, wherein in response to the second operation, the method further comprises:
reducing, by the electronic device, an application icon display area in the first folder, wherein a reduced application icon display area specifically comprises one or more of the following: a quantity of displayed icons of applications, a size of the displayed icon of the application, or a spacing between the displayed icons of the applications in the application icon display area is reduced.

5. The method according to any one of claims 2 to 4, wherein the second operation is a slide operation of the user in a first direction on the second user interface, the service widget display area is enlarged with the slide operation, and the application icon display area is reduced with the slide operation.

6. The method according to any one of claims 1 to 5, wherein the method further comprises:
detecting, by the electronic device, a slide operation of the user in the first direction in the service widget display area; and
in response to the slide operation, displaying, by the electronic device in a scrolling manner, more service widgets associated with the first folder.

7. The method according to any one of claims 1 to 6, wherein the icons of the one or more applications and the service widgets are respectively displayed in a first display area and a second display area.

8. The method according to any one of claims 1 to 7, wherein the icons of the applications in the first folder are displayed on a plurality of pages, the plurality of pages comprise a first page and a second page, and when an icon of an application on the first page is displayed on the second user interface, the service widget displayed on the second user interface is a service widget associated with the application on the first page.

9. The method according to claim 8, wherein the method further comprises:
detecting, by the electronic device, a page switching operation of the user; and
displaying, by the electronic device, an icon of an application on the second page in response to the page switching operation, and correspondingly, displaying, by the electronic device, a service widget associated with the application on the second page.

10. The method according to any one of claims 1 to 9, wherein the method further comprises:
detecting, by the electronic device, a third operation of the user on the second user interface; and
hiding, by the electronic device, all or a part of the displayed service widgets in response to the third operation.

11. The method according to any one of claims 1 to 10, wherein the method further comprises:
detecting, by the electronic device, a slide operation of the user in a second direction in the service widget display area; and
in response to the slide operation, displaying, by the electronic device in the scrolling manner, the service widgets associated with the first folder.

12. The method according to any one of claims 1 to 11, wherein the method further comprises:
detecting, by the electronic device, a fourth operation, wherein the fourth operation is used to pin a target service widget in the one or more service widgets on top for display; and
moving, by the electronic device, the target service widget to a pinned position in response to the fourth operation.

13. The method according to any one of claims 1 to 12, wherein the method further comprises:
detecting, by the electronic device, a fifth operation; and
displaying, by the electronic device, a first window in response to the fifth operation, wherein the first window comprises one or more options, the one or more options are used to perform, when being triggered, an editing operation on a selected service widget in the one or more service widgets, and the editing operation comprises any one of the following:
moving the selected service widget to a higher ranking position in the plurality of service widgets;
removing the selected service widget;
adding the selected service widget to a desktop;
moving the selected service widget to the area in which the icons of the one or more applications are located in the first folder; or
generating a combined widget based on selected service widgets.

14. The method according to any one of claims 1 to 13, wherein the method further comprises:
detecting, by the electronic device, an operation of touching and holding and dragging, by the user, the target service widget in the one or more service widgets to the first display area, wherein the first display area is used to display the icons of the one or more applications in the first folder; and
adding, by the electronic device, the target service widget to the first folder in response to the operation.

15. The method according to any one of claims 1 to 14, wherein the one or more service widgets comprise a first service widget, and the method further comprises:
when a first condition is met, automatically adjusting, by the electronic device, a ranking position of the first service widget in the plurality of service widgets, wherein
the first condition comprises one or more of the following: ranking positions of the icons of the applications in the first folder change, a quantity of use times of the first service widget changes, or display content on the first service widget changes.

16. The method according to any one of claims 1 to 15, wherein the service widgets associated with the first folder specifically comprise:
a service widget provided by the one or more applications;
and/or
a service widget provided by another application of a same type as the one or more applications;
and/or
a service widget that is related to the one or more applications and that is provided by a system.

17. An electronic device, wherein the electronic device comprises one or more processors and one or more memories, the one or more memories are coupled to the one or more processors, the one or more memories are configured to store computer-readable instructions, and when the one or more processors execute the computer-readable instructions, the electronic device is enabled to perform the method according to any one of claims 1 to 16.

18. A computer storage medium, wherein the computer storage medium stores computer-readable instructions, and when the computer-readable instructions are run on an electronic device, the electronic device is enabled to perform the method according to any one of claims 1 to 16.
